# EUROPÄISCHE PATENTSCHRIFT

(11) **EP 2 847 505 B1**
(45) Veröffentlichungstag und Bekanntmachung des Hinweises auf die Patenterteilung: **29.06.2016**
(21) Anmeldenummer: 13731019.9
(22) Anmeldetag: 06.05.2013
(51) Int. Cl.: F16L 37/088

(54) **STECKVERBINDUNG ZUM VERBINDEN VON LEITUNGEN FÜR UNTER DRUCK GESETZTE FLÜSSIGKEITEN ODER GASE**
PLUG CONNECTION FOR CONNECTING LINES FOR PRESSURISED LIQUIDS OR GASES
CONNEXION PAR ENFICHAGE POUR RELIER DES LIGNES DESTINÉES À DES LIQUIDES OU GAZ SOUS PRESSION

(30) Priorität: 07.05.2012 AT 5372012
(43) Veröffentlichungstag der Anmeldung: 18.03.2015
(73) Patentinhaber: Henn GmbH & Co.KG, 6850 Dornbirn (AT)
(72) Erfinder: HARTMANN, Harald, A-6850 Dornbirn (AT)
(74) Vertreter: Burger, Hannes
(86) Internationale Anmeldenummer: PCT/AT2013/050101
(87) Internationale Veröffentlichungsnummer: WO 2013/166536

(56) Entgegenhaltungen:
- EP-A2- 1 705 417
- WO-A1-2011/106805

## Beschreibung

Die Erfindung betrifft eine Steckverbindung zum Verbinden von Leitungen für unter Druck gesetzte Flüssigkeiten oder Gase umfassend einen ersten Steckverbinder mit einer Einsteckseite und einer axial gegenüberliegenden Befestigungsseite, einen zweiten Steckverbinder mit einer Einsteckseite und einer axial gegenüberliegenden Befestigungsseite, wobei der zweite Steckverbinder mit seiner Einsteckseite in den ersten Steckverbinder über dessen Einsteckseite einsteckbar ist, und eine am ersten Steckverbinder befestigte bzw. angeordnete Rastfeder, welche in einer geschlossenen bzw. aktiven Position am ersten Steckverbinder und bei einem eingesteckten zweiten Steckverbinder mit zumindest einem Halteabschnitt in eine in einer Außenseite des zweiten Steckverbinders zumindest in einem Teilabschnitt radial umlaufenden Nut eingreift, sodass ein Loslösen des in den ersten Steckverbinder eingesteckten zweiten Steckverbinders unterbunden ist, und wobei zwischen der Einsteckseite und der Nut des zweiten Steckverbinders, vorzugsweise unmittelbar vor der Nut, eine zumindest in einem Teilabschnitt radial umlaufende Anlaufschräge für den zumindest einen Halteabschnitt der Rastfeder ausgebildet ist. Weiterhin wird ein Verfahren zur Verwendung einer solchen Steckverbindung angegeben.

In diesem Zusammenhang sei angemerkt, dass in diesem Dokument mit der "Verwendung einer Steckverbindung" jegliche Benutzung der Steckverbindung nach der Fabrikation der Steckverbindung gemeint ist, sodass insbesondere das Zusammenfügen der Steckverbindung bzw. des ersten und zweiten Steckverbinders der Steckverbindung auf deren Befestigungsseiten mit den über die Steckverbindung zu verbindenden Leitungen eine solche Verwendung darstellt.

Aus der WO 2011/106805 A1 und der DE 10 2008 027 204 A1 sind Steckverbindungen umfassend einen ersten Steckverbinder mit einer Rastfeder und einen zweiten, in den ersten Steckverbinder einsteckbaren Steckverbinder mit einer zur Rastfeder korrespondierenden, radial umlaufenden Nut und Verfahren zur Verwendung solcher Steckverbindungen bekannt, wobei mit einem entfernbaren Sperrkörper bzw. Füllelement im Einsteckbereich des ersten Steckverbinders ein vollständiges Einstecken des zweiten Steckverbinders in den ersten Steckverbinder verhindert werden kann. In der WO 2011/106805 A1 ist weiters beschrieben, dass der Sperrkörper vorab im Einsteckbereich des ersten Steckverbinders angebracht wird und dass dieser Sperrkörper erst durch eine Befestigungsvorrichtung im Zuge der erfolgreichen Befestigung des ersten Steckverbinders an einem Ende einer Leitung entfernt wird.

Bei diesen Steckverbindungssystemen ist jedoch insbesondere im Zusammenhang mit relativ weichen Sperrkörpern bzw. Füllelementen und/oder zweiten Steckverbindern beispielsweise aus Kunststoff nicht sichergestellt, dass vor allem bei Einsteckversuchen mit erhöhter Kraft ein vollständiges Einstecken des zweiten Steckverbinders in den ersten Steckverbinder aufgrund des vorhandenen Sperrkörpers bzw. Füllelements verhindert wird. Eine solche Fehlfunktion wird auch dadurch begünstigt, dass jeweils nur ein einzelner Sperrkörper bzw. ein einzelnes Füllelement für den ersten Steckverbinder vorgesehen ist.

Weiters ist eine separate Bereitstellung und Anbringung des Sperrkörpers bzw. Füllelements am ersten Steckverbinder notwendig, und es ist eine selbstständige bzw. ungewollte Loslösung des Sperrkörpers bzw. Füllelements vom ersten Steckverbinder möglichst zu verhindern. Darüber hinaus macht die Anbringung und spätere Entfernung des Sperrkörpers bzw. Füllelements eine umfangreiche und aufwändige Umgestaltung der Herstellungsvorrichtung und der Befestigungsvorrichtung des ersten Steckverbinders notwendig.

Der vorliegenden Erfindung liegt die Aufgabe zugrunde, eine Steckverbindung und ein Verfahren zur Verwendung einer solchen Steckverbindung zu schaffen, womit auf möglichst sichere, einfache und kostengünstige Art und Weise sichergestellt werden kann, dass nur ordnungsgemäß verarbeitete Steckverbinder der Steckverbindung miteinander verbunden werden können.

Die erstgenannte Aufgabe der Erfindung wird mit einer Steckverbindung der eingangs genannten Art gelöst, bei der die Rastfeder in der geschlossenen Position am ersten Steckverbinder von einer gesperrten Position, in welcher Position der zumindest eine Halteabschnitt relativ zum ersten Steckverbinder in einer Bewegung radial nach außen blockiert ist, in eine entsperrte Position bewegbar ist, in welcher Position die Bewegung des zumindest einen Halteabschnitts radial nach außen freigegeben ist, und bei welcher Steckverbindung am ersten Steckverbinder eine wahlweise aktivierbare Entsperrvorrichtung angeordnet ist, wobei die deaktivierte Entsperrvorrichtung eine Positionierung der Rastfeder in der gesperrten Position zulässt und die aktivierte Entsperrvorrichtung die Rastfeder in der entsperrten Position hält. Dadurch ist eine Steckverbindung geschaffen, mit der auf einfache und sichere Art und Weise ein Verbinden von nicht ordnungsgemäß verarbeiteten Steckverbindern verhindert werden kann, da in einem solchen Fall die Entsperrvorrichtung für die Rastfeder deaktiviert bleibt und durch die Blockierung der Bewegung des zumindest einen Halteabschnitts der Rastfeder radial nach außen ein Einstecken des zweiten Steckverbinders in den ersten Steckverbinder sicher verhindert ist. Somit kann auf sehr einfache Weise insbesondere verhindert werden, dass erste Steckverbinder, welche an ihrer Befestigungsseite noch nicht bzw. nur unzulänglich mit der Leitung in einem Befestigungsvorgang verbunden bzw. verpresst wurden, mit einem zweiten Steckverbinder verbunden werden können, da die Entsperrvorrichtung der Rastfeder erst während bzw. unmittelbar nach einem erfolgreichen Befestigungsvorgang aktiviert wird, sodass die Bewegung des zumindest einen Halteabschnitts der Rastfeder radial nach außen erst dann freigegeben ist. Besonders vorteilhaft ist es auch, dass durch eine solche Ausgestaltung der Steckverbindung keine Mehrkosten in der Herstellung entstehen, da keine zusätzlichen Komponenten benötigt werden.

Sehr günstig ist es in diesem Zusammenhang, wenn die Rastfeder im Wesentlichen an einer Außenseite des ersten Steckverbinders angeordnet ist und zumindest einen Schenkel umfasst, welcher Schenkel bzw. zumindest ein Teil davon bei geschlossener Rastfeder durch einen radial in einem Teilabschnitt des ersten Steckverbinders umlaufenden Schlitz in einen Innenbereich des ersten Steckverbinders hineinragt und den zumindest einen Halteabschnitt bildet, wobei der Schlitz in einem seiner beiden Endbereiche eine von der Einsteckseite des ersten Steckverbinders abgewandte Ausnehmung bzw. Verbreiterung zur Aufnahme des zumindest einen Schenkels der Rastfeder aufweist, welche Ausnehmung sich über weniger als die Hälfte der Längsausdehnung des Schlitzes erstrecken, und wenn die Entsperrvorrichtung im Wesentlichen an der Außenseite des ersten Steckverbinders angeordnet ist und einen entlang der Längsausdehnung des Schlitzes drehbeweglichen Ring umfasst, welcher Ring im Bereich der Ausnehmung des Schlitzes zwei in axialer Richtung zur Befestigungsseite des ersten Steckverbinders hin betrachtet unterschiedlich vertiefte Abschnitte vorzugsweise mit einer dazwischen verlaufenden Schräge aufweist, wobei durch Drehung des Rings entweder der stärker vertiefte Abschnitt über die Ausnehmung bewegbar ist, sodass die Ausnehmung freigelegt ist und die Entsperrvorrichtung deaktiviert ist, oder der weniger stark vertiefte Abschnitt über die Ausnehmung bewegbar ist, sodass die Ausnehmung verdeckt ist und die Entsperrvorrichtung aktiviert ist. Dadurch ist auf besonders einfache und kostengünstige Art und Weise eine Steckverbindung geschaffen, bei der je nach Situation ein Einstecken des zweiten Steckverbinders in den ersten Steckverbinder verhindert bzw. ermöglicht werden kann. Dabei wird einerseits bei einer deaktivierten Entsperrvorrichtung durch die Positionierung des zumindest einen Schenkels der Rastfeder in der Ausnehmung des Schlitzes eine Bewegung des Halteabschnitts der Rastfeder radial nach außen sicher verhindert bzw. unterbunden und andererseits bei einer aktivierten Entsperrvorrichtung durch die Abdeckung der Ausnehmung des Schlitzes bzw. dem Herausbewegen des zumindest einen Schenkels der Rastfeder aus der Ausnehmung des Schlitzes eine Bewegung des Halteabschnitts der Rastfeder radial nach außen sicher ermöglicht.

Vorteilhaft ist es dabei, wenn mehrere Schlitze und eine Rastfeder mit mehreren, entsprechenden Halteabschnitten, insbesondere zwei gegenüberliegende Schlitze mit gespiegelt angeordneten Ausnehmungen und eine Rastfeder mit zwei Schenkeln bzw. Halteabschnitten, ausgebildet sind. Durch eine solche mehrseitige, insbesondere zweiseitige, Ausbildung von Halteabschnitten ist eine besonders robuste, jedoch immer noch einfache und kostengünstige Steckverbindung geschaffen, bei der bei einer gesperrten Rastfeder ein Einstecken des zweiten Steckverbinders in den ersten Steckverbinder sicher verhindert ist.

Günstig ist es auch, wenn der jeweilige Schlitz im ersten Steckverbinder in beiden Endbereichen jeweils eine sich über weniger als die Hälfte der Längsausdehnung des Schlitzes erstreckende Ausnehmung aufweist und der drehbewegliche Ring im Bereich einer Ausnehmung jeweils zwei in axialer Richtung zur Befestigungsseite des ersten Steckverbinders hin betrachtet unterschiedlich vertiefte Abschnitte vorzugsweise mit einer dazwischen verlaufenden Schräge aufweist. Auf diese Weise ist eine besonders sichere Sperrung bzw. Verriegelung der Rastfeder bezüglich einer Bewegung radial nach außen bei einer deaktivierten Entsperrvorrichtung sichergestellt.

Besonders günstig ist es auch, wenn ein Abschnitt des ersten Steckverbinders, welcher Abschnitt unmittelbar neben dem Schlitz in Richtung zur Befestigungsseite des ersten Steckverbinders liegt, durch einen insbesondere mehrlagigen Blechteil gebildet ist. Auf diese Weise ist eine Steckverbindung mit einer sehr hohen Funktionssicherheit geschaffen, da der Abschnitt des ersten Steckverbinders, welcher bei einer deaktivierten Entsperrvorrichtung eine Bewegung des zumindest einen Schenkels der Rastfeder radial nach außen unterbindet, besonders robust ausgebildet ist. Diese hohe Funktionssicherheit bzw. Robustheit der Steckverbindung wird insbesondere auch dadurch unterstützt, dass die Rastfeder vorzugsweise ebenso aus Metall gefertigt ist.

Vorteilhaft ist es, wenn zumindest ein axial ausgerichteter Vorsprung an der Außenseite des zweiten Steckverbinders ausgebildet ist, welcher Vorsprung beim Einstecken des zweiten Steckverbinders in den ersten Steckverbinder in zumindest eine korrespondierende, axial ausgerichtete Nut mit einer Stirnseitenöffnung an der Einsteckseite des ersten Steckverbinders einschiebbar ist, wenn die Entsperrvorrichtung aktiviert ist, und dass das Einschieben des zumindest einen Vorsprungs in die zumindest eine Nut von der deaktivierten Entsperrvorrichtung blockiert ist. Auf diese Weise wird eine sichere Verriegelung der Steckverbindung bei einer deaktivierten Entsperrvorrichtung unterstützt, sodass ein Einstecken des zweiten Steckverbinders in den ersten Steckverbinder unterbunden ist.

Vorteilhaft ist es in diesem Zusammenhang, wenn die Entsperrvorrichtung im Wesentlichen an der Außenseite des ersten Steckverbinders angeordnet ist und einen entlang des Außenumfangs des ersten Steckverbinders drehbeweglichen Ring umfasst, welcher Ring einen ersten Nutabschnitt aufweist, der bei einer aktivierten Entsperrvorrichtung in radialer Richtung fluchtend mit einem zweiten Nutabschnitt im ersten Steckverbinder ausgerichtet ist und welcher erste Nutabschnitt bei einer durch eine Verdrehung des Rings deaktivierten Entsperrvorrichtung vom zweiten Nutabschnitt entlang des Außenumfangs des ersten Steckverbinders beabstandet positioniert ist. Auf diese Weise ist ein besonders einfacher und kostengünstiger, weiterer Verriegelungsmechanismus geschaffen, welcher keine zusätzlichen Komponenten erfordert.

Vorteilhaft ist es auch, wenn ein Haltevorsprung der Entsperrvorrichtung bei einer deaktivierten Entsperrvorrichtung in eine erste Haltenut und bei einer aktivierten Entsperrvorrichtung in eine zweite Haltenut eingreift und wenn der Haltevorsprung insbesondere durch einen mechanische Kraftaufwand aus der jeweiligen Haltenut herausbewegbar und zusammen mit der Entsperrvorrichtung zur jeweils anderen Haltenut weiterbewegbar ist. Auf diese Weise ist sichergestellt, dass sich die Entsperrvorrichtung nicht selbstständig bzw. ungewollt von der deaktivierten Position in die aktivierte Position bzw. in die umgekehrte Richtung bewegt.

Vorteilhaft ist es zudem, wenn die Rastfeder von der geschlossenen bzw. aktiven Position am ersten Steckverbinder in eine geöffnete bzw. inaktive Position am ersten Steckverbinder bewegbar ist, in welcher geöffneten Position der zumindest eine Halteabschnitt der Rastfeder außerhalb der Nut in der Außenseite eines eingesteckten zweiten Steckverbinders angeordnet ist. Auf diese Weise ist eine Steckverbindung geschaffen, bei der ein Trennen des ersten und des zweiten Steckverbinders besonders schnell und einfach, insbesondere ohne Zuhilfenahme eines Zusatzwerkzeugs, möglich ist.

Die zweitgenannte Aufgabe der Erfindung wird mit einem Verfahren zur Verwendung einer Steckverbindung der eingangs genannten Art gelöst, bei dem vor der Verwendung jedes ersten Steckverbinders die Rastfeder gegebenenfalls geschlossen und die Entsperrvorrichtung deaktiviert wird, wodurch eine Positionierung der Rastfeder in der gesperrten Position zugelassen wird, und wobei bei einem Einsteckversuch mit dem zweiten Steckverbinder die Rastfeder entweder bereits in der gesperrten Position positioniert ist oder durch die Anlaufschräge des zweiten Steckverbinders in die gesperrte Position bewegt wird, sodass der zumindest eine Halteabschnitt der Rastfeder relativ zum ersten Steckverbinder in einer Bewegung radial nach außen blockiert wird und ein vollständiges Einstecken des zweiten Steckverbinders in den ersten Steckverbinder verunmöglicht wird, und bei welchem Verfahren während oder unmittelbar nach einer erfolgreichen Befestigung einer Leitung an der Befestigungsseite des ersten Steckverbinders mittels einer Befestigungsvorrichtung die Entsperrvorrichtung der Rastfeder aktiviert wird, wodurch die Rastfeder in die entsperrte Position bewegt bzw. dort gehalten wird, und wobei bei einem Einsteckversuch mit dem zweiten Steckverbinder der zumindest eine Halteabschnitt der Rastfeder durch die Anlaufschräge des zweiten Steckverbinders relativ zum ersten Steckverbinder radial nach außen bewegt wird und der zweite Steckverbinder vollständig in den ersten Steckverbinder eingesteckt und durch den zumindest einen Halteabschnitt, welcher daraufhin in die Nut des zweiten Steckverbinders eingreifen kann, arretiert wird. Dadurch wird auf besonders einfache und sichere Art und Weise verhindert, dass unzureichend verarbeitetet Steckverbinder zu einer geschlossenen Steckverbindung zusammengefügt werden können, da erst während oder unmittelbar nach einer erfolgreichen Befestigung einer Leitung an der Befestigungsseite des ersten Steckverbinders mittels der BefestigungsVorrichtung die Entsperrvorrichtung der Rastfeder aktiviert wird und somit ein Einstecken des zweiten Steckverbinders in den ersten Steckverbinder ermöglicht wird. Auch werden durch eine solche Vorgangsweise nur geringe Mehrkosten verursacht, da in diesem Fall für den Befestigungsprozess der Leitung an der Befestigungsseite des ersten Steckverbinders mittels der Befestigungsvorrichtung keine aufwändigen Absicherungen nötig sind sondern eine integrierte Absicherung im Standardprozess möglich ist.

Vorteilhaft ist es, wenn vor der Verwendung jedes ersten Steckverbinders die Rastfeder gegebenenfalls geschlossen und die Entsperrvorrichtung deaktiviert wird, indem durch Drehen des Rings an der Außenseite des ersten Steckverbinders jeweils der stärker vertiefte Abschnitt des Rings über die jeweilige Ausnehmung des Schlitzes des ersten Steckverbinders bewegt wird, wodurch die zumindest eine Ausnehmung freigelegt wird und eine Positionierung des zumindest einen Schenkels der Rastfeder in der zumindest einen Ausnehmung zugelassen wird, und wobei bei einem Einsteckversuch mit dem zweiten Steckverbinder der zumindest eine Schenkel entweder bereits in der zumindest einen Ausnehmung positioniert ist oder durch die Anlaufschräge des zweiten Steckverbinders in die zumindest eine Ausnehmung hineinbewegt wird, sodass der zumindest eine Schenkel relativ zum ersten Steckverbinder in einer Bewegung radial nach außen blockiert wird und ein vollständiges Einstecken des zweiten Steckverbinders in den ersten Steckverbinder verunmöglicht wird, und wenn während oder unmittelbar nach einer erfolgreichen Befestigung einer Leitung an der Befestigungsseite des ersten Steckverbinders mittels einer Befestigungsvorrichtung die Entsperrvorrichtung der Rastfeder aktiviert wird, indem durch Drehen des Rings jeweils der weniger stark vertiefte Abschnitt des Rings über die jeweilige Ausnehmung des Schlitzes bewegt wird, wodurch die zumindest eine Ausnehmung verdeckt wird und der zumindest eine Schenkel vorzugsweise entlang der zwischen dem stärker vertieften Abschnitt und dem weniger stark vertieften Abschnitt verlaufenden Schräge aus der zumindest einen Ausnehmungen herausbewegt wird oder der zumindest eine Schenkel außerhalb der zumindest einen Ausnehmungen gehalten wird, und wobei bei einem Einsteckversuch mit dem zweiten Steckverbinder der zumindest eine Schenkel durch die Anlaufschräge des zweiten Steckverbinders relativ zum ersten Steckverbinder radial nach außen bewegt wird und der zweite Steckverbinder vollständig in den ersten Steckverbinder eingesteckt und durch den zumindest einen Schenkel, welcher daraufhin in die Nut des zweiten Steckverbinders eingreifen kann, arretiert wird. Auf diese Weise ist eine besonders einfache, sichere und kostengünstige Sperrung bzw. Verriegelung des ersten Steckverbinders mit Hilfe seiner Rastfeder bei einer nicht ordnungsgemäßen Verbindung des ersten Steckverbinders mit der Leitung sichergestellt.

Besonders vorteilhaft ist es in diesem Zusammenhang, wenn während oder unmittelbar nach einer erfolgreichen Befestigung der Leitung an der Befestigungsseite des ersten Steckverbinders die Aktivierung der Entsperrvorrichtung von der Befestigungsvorrichtung für die Leitung durchgeführt wird. Auf diese Weise wird eine besonders hohe Sicherheit erreicht, da die Aktivierung der Entsperrvorrichtung bzw. die Entriegelung des ersten Steckverbinders unmittelbar beim Befestigungsvorgang der Leitung an der Befestigungsseite des ersten Steckverbinders und ohne einen weiteren Zwischen- bzw. Zusatzschritt erfolgt. Dabei überprüft die Befestigungsvorrichtung für die Leitung vorzugsweise anhand mehrerer Prozessparameter, ob der Befestigungsvorgang erfolgreich durchgeführt werden konnte oder nicht und entriegelt bei einem erfolgreichen Abschluss des Befestigungsvorgangs der Leitung vollautomatisch die Rastfeder des ersten Steckverbinders. Ebenso werden die Mehrkosten gering gehalten, da die Befestigungsvorrichtung für die Leitung auch für das Entriegeln der Rastfeder des ersten Steckverbinders verwendet wird.

Zum besseren Verständnis der Erfindung wird diese anhand der nachfolgenden Figuren näher erläutert.

Es zeigen jeweils in stark vereinfachter, schematischer Darstellung:
- Fig. 1: die beiden getrennten Steckverbinder einer Steckverbindung mit der Rastfeder am ersten Steckverbinder in der geschlossenen und gesperrten Position in einer perspektivischen Ansicht;
- Fig. 2: den ersten Steckverbinder aus Fig. 1 von der Einsteckseite aus betrachtet;
- Fig. 3: die Steckverbindung aus Fig. 1 in einer Seitenansicht;
- Fig. 4: eine Schnittdarstellung der Steckverbindung aus Fig. 3 entlang der Linie IV-IV;
- Fig. 5: die beiden möglichst weit ineinander gesteckten Steckverbinder der Steckverbindung gemäß Fig. 1 mit der Rastfeder am ersten Steckverbinder in der geschlossenen und gesperrten Position in einer Schnittdarstellung wie in Fig. 4;
- Fig. 6: die beiden vollständig ineinander gesteckten Steckverbinder der Steckverbindung gemäß Fig. 1 mit der Rastfeder am ersten Steckverbinder in der geschlossenen und in der von der Entsperrvorrichtung dort gehaltenen, entsperrten Position in einer perspektivischen Ansicht;
- Fig. 7: die Steckverbindung aus Fig. 6 in einer Seitenansicht;
- Fig. 8: eine Schnittdarstellung der Steckverbindung aus Fig. 7 entlang der Linie VIII-VIII;
- Fig. 9: den ersten Steckverbinder von der Einsteckseite aus betrachtet und mit der Rastfeder am ersten Steckverbinder in der geöffneten Position;
- Fig. 10: die beiden getrennten Steckverbinder einer weiteren Ausführungsform einer Steckverbindung mit der Rastfeder am ersten Steckverbinder in der geschlossenen und gesperrten Position in einer perspektivischen Ansicht;
- Fig. 11: den ersten Steckverbinder aus Fig. 10 von der Einsteckseite aus betrachtet;
- Fig. 12: die Steckverbindung aus Fig. 10 in einer Seitenansicht;
- Fig. 13: eine Schnittdarstellung der Steckverbindung aus Fig. 12 entlang der Linie XIII-XIII;
- Fig. 14: die beiden möglichst weit ineinander gesteckten Steckverbinder der weiteren Ausführungsform der Steckverbindung gemäß Fig. 10 mit der Rastfeder am ersten Steckverbinder in der geschlossenen und gesperrten Position in einer Schnittdarstellung wie in Fig. 13;

- Fig. 15: die beiden vollständig ineinander gesteckten Steckverbinder der weiteren Ausführungsform der Steckverbindung gemäß Fig. 10 mit der Rastfeder am ersten Steckverbinder in der geschlossenen und in der von der Entsperrvorrichtung dort gehaltenen, entsperrten Position in einer perspektivischen Ansicht;
- Fig. 16: die Steckverbindung aus Fig. 15 in einer Seitenansicht;
- Fig. 17: eine Schnittdarstellung der Steckverbindung aus Fig. 16 entlang der Linie XVII-XVII.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

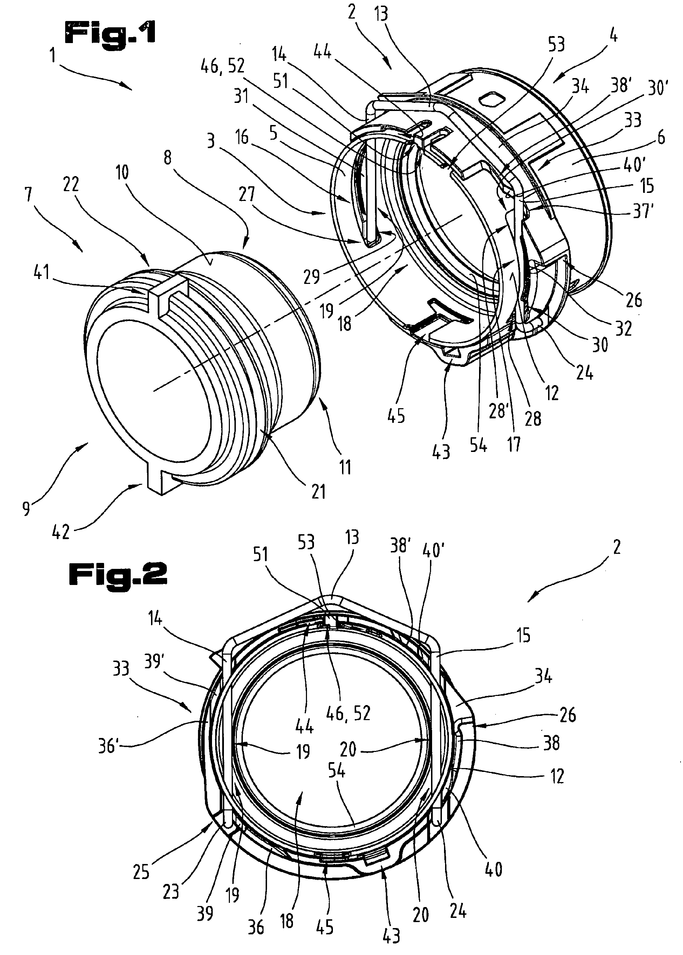

Die Fig. 1 bis 9 zeigen eine erste Ausführungsform einer Steckverbindung 1 zum Verbinden von Leitungen für unter Druck gesetzte Flüssigkeiten oder Gase in verschiedenen Ansichten und in unterschiedlichen Zuständen.

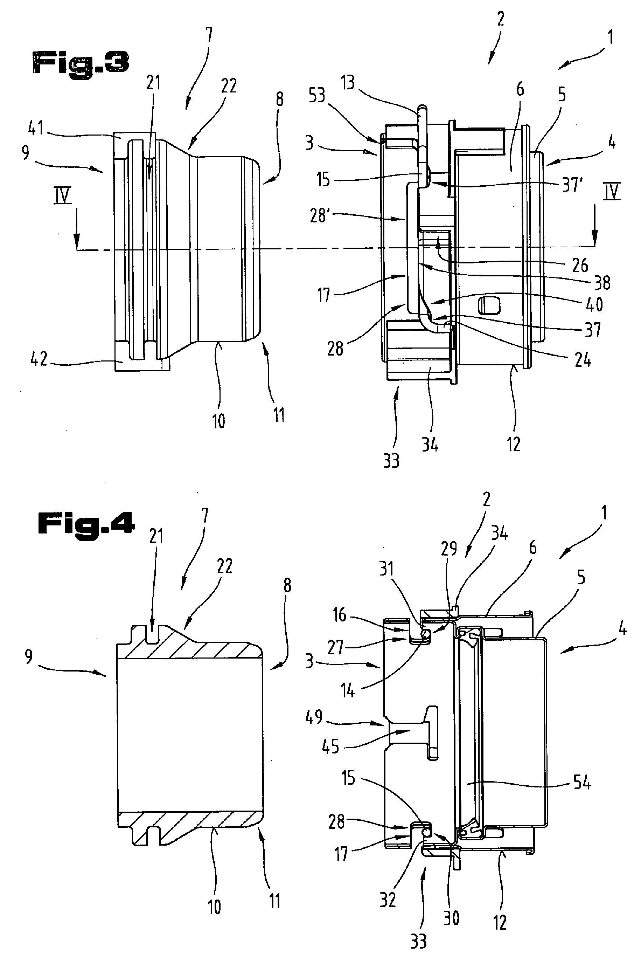

Die Steckverbindung 1 umfasst einen ersten Steckverbinder 2 mit einer Einsteckseite 3 und einer axial gegenüberliegenden Befestigungsseite 4, wobei der erste Steckverbinder 2 an seiner Befestigungsseite 4 bevorzugt mit einer flexiblen Leitung dichtend verbunden ist. Ein Endabschnitt der nicht dargestellten, flexiblen Leitung wird dazu zwischen einer Innenwandung 5 und einer Außenwandung 6 an der Befestigungsseite 4 des ersten Steckverbinders 2 - siehe beispielsweise Fig. 4 - angeordnet und es wird mit einer nicht dargestellten Befestigungsvorrichtung die Innenwandung 6 radial umlaufend nach außen in Richtung zur flexiblen Leitung bzw. zur Außenwandung 6 verformt bzw. verpresst, sodass die abdichtende Verbindung zwischen dem ersten Steckverbinder 2 und dem Ende der flexiblen Leitung hergestellt ist. Die Innenwandung 5 und die Außenwandung 6 werden vorzugsweise durch ein einteiliges, geformtes Metallteil, insbesondere aus Stahlblech, gebildet. Insbesondere für die Außenwandung 6 ist aber auch ein anderes Material wie beispielsweise Kunststoff einsetzbar.

Weiters umfasst die Steckverbindung 1 einen zweiten Steckverbinder 7 mit einer Einsteckseite 8 und einer axial gegenüberliegenden Befestigungsseite 9, welcher zweite Steckverbinder 7 mit seiner Einsteckseite 8 in den ersten Steckverbinder 2 über dessen Einsteckseite 3 einsteckbar ist. Um diesen Einsteckvorgang zu erleichtern, ist an der Einsteckseite 8 des zweiten Steckverbinders 7 an einer Außenseite 10 des zweiten Steckverbinders 7 eine Schräge 11 ausgebildet. Der zweite Steckverbinder 7 ist über seine Befestigungsseite 9 bevorzugt am Ende einer nicht dargestellte, starren Leitung befestigt oder mit einer Vorrichtung verbunden, in welche Vorrichtung die unter Druck gesetzten Flüssigkeiten oder Gase eingeleitet bzw. aus welcher Vorrichtung die unter Druck gesetzten Flüssigkeiten oder Gase ausgeleitet werden sollen.

An dieser Stelle sei angemerkt, dass, obwohl in den gezeigten Ausführungsbeispielen der Steckverbindung 1 ausschließlich Steckverbinder 2, 7 mit runden Querschnittsformen dargestellt werden, das Gesagte ebenso auch für Steckverbindungen 1 bzw. Steckverbinder 2, 7 mit eckigen, insbesondere rechteckigen oder quadratischen, Querschnittsformen gilt.

Um den in den ersten Steckverbinder 2 eingesteckten, zweiten Steckverbinder 7 im ersten Steckverbinder 2 arretieren zu können, sodass ein Loslösen des eingesteckten, zweiten Steckverbinders 7 vom ersten Steckverbinder 2 unterbunden ist, ist im Wesentlichen an einer Außenseite 12 des ersten Steckverbinders 2 eine Rastfeder 13 mit zwei Schenkeln 14, 15 gemäß dem gezeigten Ausführungsbeispiel befestigt. In einer beispielsweise in Fig. 1 ersichtlichen, geschlossenen Position der Rastfeder 13 ragen die beiden Schenkel 14, 15 jeweils durch einen radial in einem Teilabschnitt des ersten Steckverbinders 2 umlaufenden Schlitz 16, 17 in einen Innenbereich 18 des ersten Steckverbinders 2 hinein und bilden zwei Halteabschnitte 19, 20 aus. An der Außenseite 10 des zweiten Steckverbinders 7 ist eine radial umlaufende Nut 21 ausgebildet, welche bei einem vollständig in den ersten Steckverbinder 2 eingesteckten zweiten Steckverbinder 7 in einer Ebene mit den Schlitzen 16, 17 des ersten Steckverbinder 2 liegt, sodass die Halteabschnitte 19, 20 der geschlossenen Rastfeder 13 durch die Schlitze 16, 17 hindurch in die Nut 21 des zweiten Steckverbinders 7 eingreifen können und somit ein Loslösen des in den ersten Steckverbinder 2 eingesteckten, zweiten Steckverbinders 7 unterbunden ist.

Zwischen der Einsteckseite 8 und der Nut 21 des zweiten Steckverbinders 7 ist unmittelbar vor der Nut 21 eine radial umlaufende Anlaufschräge 22 für die beiden Halteabschnitte 19, 20 der Rastfeder 13 ausgebildet, welche Anlaufschräge 22 insbesondere eine Seitenwand der Nut 21 bildet und welche Anlaufschräge 22 die beiden Halteabschnitte 19, 20 der geschlossenen Rastfeder 13 beim Einstecken des zweiten Steckverbinders 7 in den ersten Steckverbinder 2 radial auseinanderbewegt bzw. auseinanderdrückt, sodass ein Einstecken des zweiten Steckverbinders 7 in den ersten Steckverbinder 2 ermöglicht ist. Die Anlaufschräge 22 ist jedoch nicht zwingend erforderlich. Die Funktion des Auseinanderdrückens der Halteabschnitte 19, 20 der geschlossenen Rastfeder 13 kann beispielsweise auch bei einer entsprechenden Anpassung der Abmessungen bzw. Durchmesser der Steckverbindung 1 von der Schräge 11 an der Einsteckseite 8 des zweiten Steckverbinders 7 wahrgenommen werden.

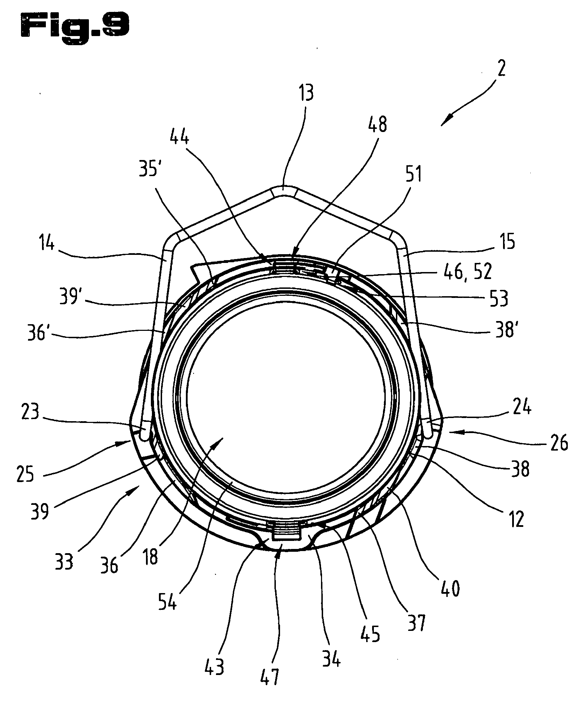

In Fig. 9 ist die Rastfester 13 dargestellt, nachdem sie von der geschlossenen Position am ersten Steckverbinder 2 in eine geöffnete Position am ersten Steckverbinder 2 bewegt wurde. Gemäß dem dargestellten Ausführungsbeispiel weist jeder Schenkel 14, 15 der Rastfeder 13 am unteren, offenen Ende einen abgewinkelten Endabschnitt 23, 24 auf, welche abgewickelten Endabschnitte 23, 24 in Haltevorrichtungen 25, 26 am ersten Steckverbinder 2 einrasten und die Rastfeder 13 in der geöffneten Position halten. Die Rastfeder 13 ist von der geschlossenen bzw. aktiven Position in die geöffnete bzw. inaktive Position bzw. von der geöffneten Position in die geschlossene Position vorzugsweise entlang einer radial zum ersten Steckverbinder 2 ausgerichteten Bahn bewegbar. Wesentlich ist, dass die Schenkel 14, 15 der Rastfeder 13 in der geöffneten Position der Rastfeder 13 auseinanderbewegt wurden, sodass die Schenkel 14, 15 nicht mehr durch die Schlitze 16, 17 in den Innenbereich 18 des ersten Steckverbinders 2 hineinragen und somit keine Halteabschnitte 19, 20 der Rastfeder 13 mehr bei einem eingesteckten zweiten Steckverbinder 7 in die Nut 21 in der Außenseite 10 des zweiten Steckverbinders 7 eingreifen.

Wie am besten in Fig. 1 erkennbar ist, weist jeder der beiden Schlitze 16, 17 des ersten Steckverbinders 12 in der dargestellten Ausführungsform in jedem seiner beiden Endbereiche 27, 27', 28, 28' eine von der Einsteckseite 3 des ersten Steckverbinders 2 abgewandte Ausnehmung 29, 29', 30, 30' bzw. Verbreiterung zur Aufnahme des jeweiligen Schenkels 14, 15 der Rastfeder 13 auf, wobei sich jede Ausnehmung über weniger als die Hälfte der Längsausdehnung des entsprechenden Schlitzes 16, 17 erstreckt. Die Ausnehmung 29, 29`, 30, 30` selbst ist am besten in Fig. 4 erkennbar.

Die Schenkel 14, 15 und damit die Rastfeder 13 sind bzw. ist somit von einer entsperrten Position, in welcher Position der jeweilige Schenkel 14, 15 fluchtend im jeweiligen Schlitz 16, 17 angeordnet ist und daher eine Bewegung des entsprechenden Halteabschnitts 19, 20 des Schenkels 14, 15 radial nach außen freigegeben ist, entlang einer Bewegung in axialer Richtung bezogen auf den ersten Steckverbinder 2 in eine gesperrte Position bewegbar ist, in welcher Position der jeweilige Schenkel 14, 15 in den entsprechenden beiden Ausnehmungen 29, 29', 30, 30' angeordnet ist und daher der entsprechende Halteabschnitt 19, 20 des jeweiligen Schenkels 14, 15 in einer Bewegung radial nach außen blockiert ist. In der gesperrten Position der Rastfeder 13 blockiert ein vorspringender Abschnitt 31, 32 des ersten Steckverbinders 2 unmittelbar neben dem jeweiligen Schlitz 16, 17 in Richtung zur Befestigungsseite 4 des ersten Steckverbinders hin eine Bewegung des jeweiligen Halteabschnitts 19, 20 radial nach außen, da die Schenkel 14, 15 in den Ausnehmungen 29, 29', 30, 30' positioniert sind.

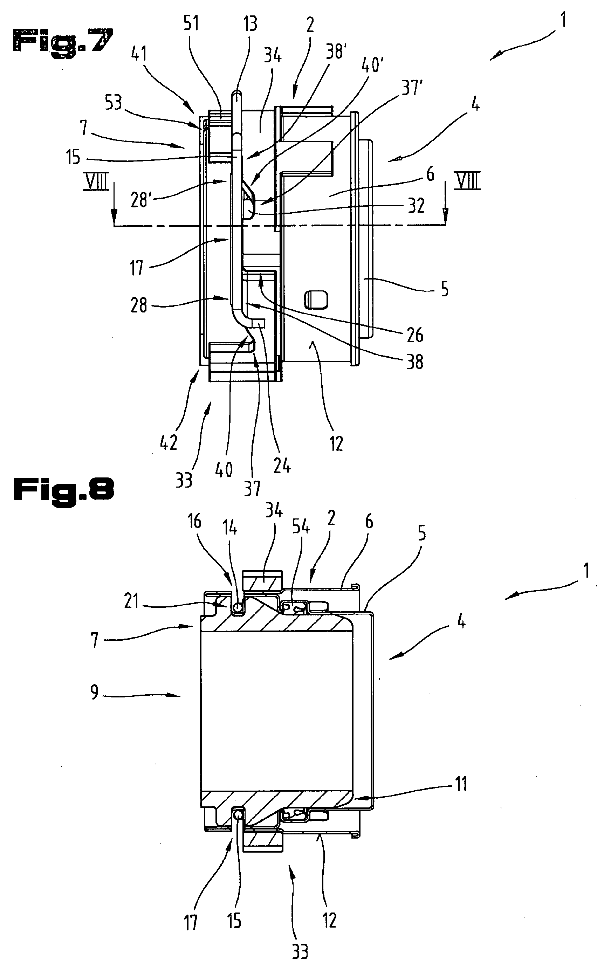

Im Wesentlichen an der Außenseite 12 des ersten Steckverbinders 2 ist weiters eine Entsperrvorrichtung 33 umfassend einen entlang der Längsausdehnung der Schlitze 16, 17 drehbeweglichen Ring 34 manschettenartig angeordnet. Der Ring 34 der Entsperrvorrichtung 33 liegt an der Außenseite 12 des ersten Steckverbinders 2 über den Schlitzen 16, 17 und weist im Bereich jeder Ausnehmung 29, 29`, 30, 30` der Schlitze 16, 17 jeweils zwei in axialer Richtung zur Befestigungsseite 4 des ersten Steckverbinders 2 hin betrachtet unterschiedlich vertiefte Abschnitte 35, 36, 35', 36', 37, 38, 37', 38' auf, wobei jeweils zwischen den zwei nebeneinanderliegenden Abschnitten 35, 36, 35', 36', 37, 38, 37', 38' eine dazwischen verlaufende Schräge 39, 39`, 40, 40` ausgebildet ist. Durch eine Drehung des Rings 34 in eine der beiden möglichen Drehrichtungen kann nun entweder der stärker vertiefte Abschnitt 35, 35`, 37, 37` über die jeweilige Ausnehmung 29, 29`, 30, 30` bewegt werden, sodass die jeweilige Ausnehmung 29, 29`, 30, 30' freigelegt ist und die Entsperrvorrichtung 33 deaktiviert ist, oder es kann der weniger stark vertiefte Abschnitt 36, 36', 38, 38' über die jeweilige Ausnehmung 29, 29', 30, 30' bewegt werden, sodass die jeweilige Ausnehmung 29, 29', 30, 30' verdeckt ist und die Entsperrvorrichtung 33 aktiviert ist. Die unterschiedlich vertieften Abschnitte 35, 35', 36, 36', 37, 37',38, 38' des Rings 34 und die jeweils dazwischen verlaufende Schräge 39, 39', 40, 40' sind am besten in den Fig. 3 und 7 ersichtlich. Die wahlweise aktivierbare Entsperrvorrichtung 33 umfassend den Ring 34 ist also derart ausgebildet, dass die deaktivierte Entsperrvorrichtung 33 eine Positionierung der Rastfeder 13 in der gesperrten Position zulässt, da die Ausnehmungen 29, 29', 30, 30' durch die stärker vertieften Abschnitte 35, 35', 37, 37' des Rings 34 freigelegt sind, und dass die aktivierte Entsperrvorrichtung 33 die Rastfeder 13 in der entsperrten Position hält, da die Ausnehmungen 29, 29', 30, 30' durch die weniger stark vertieften Abschnitte 36, 36`, 38, 38` des Rings 34 verdeckt sind.

Gemäß der gezeigten Ausführungsformen der Steckverbindung 1 sind die vorspringenden Abschnitte 31, 32 des ersten Steckverbinders 2, welche Abschnitte 31, 32 unmittelbar neben den Schlitzen 16, 17 in Richtung zur Befestigungsseite 4 des ersten Steckverbinders 2 hin liegen, durch ein zweilagiges Blechteil gebildet. Somit weisen die Abschnitte 31, 32, welche die Schenkel 14, 15 der Rastfeder 13 in der gesperrten Position an einer Bewegung radial nach außen hindern, eine erhöhte Festigkeit bzw. Stabilität auf.

Gemäß einem besonders zweckmäßigen Verfahren zur Verwendung der Steckverbindung 1 wird die Rastfeder 13 des ersten Steckverbinders 2 vor der Verwendung des ersten Steckverbinders 2, das heißt insbesondere auch vor der Befestigung der Leitung an der Befestigungsseite 4 des ersten Steckverbinders 2, gegebenenfalls, das heißt wenn sich die Rastfeder 13 nicht schon in der geschlossenen Position befindet, geschlossen und die Entsperrvorrichtung 33 wird deaktiviert, sollte dies nicht bereits der Fall sein. Gemäß einer besonders zweckmäßigen Vorgangsweise wird die Schließung der Rastfeder 13 bzw. die Deaktivierung der Entsperrvorrichtung 33 bereits bei der Herstellung des ersten Steckverbinders 2 durchgeführt bzw. sichergestellt.

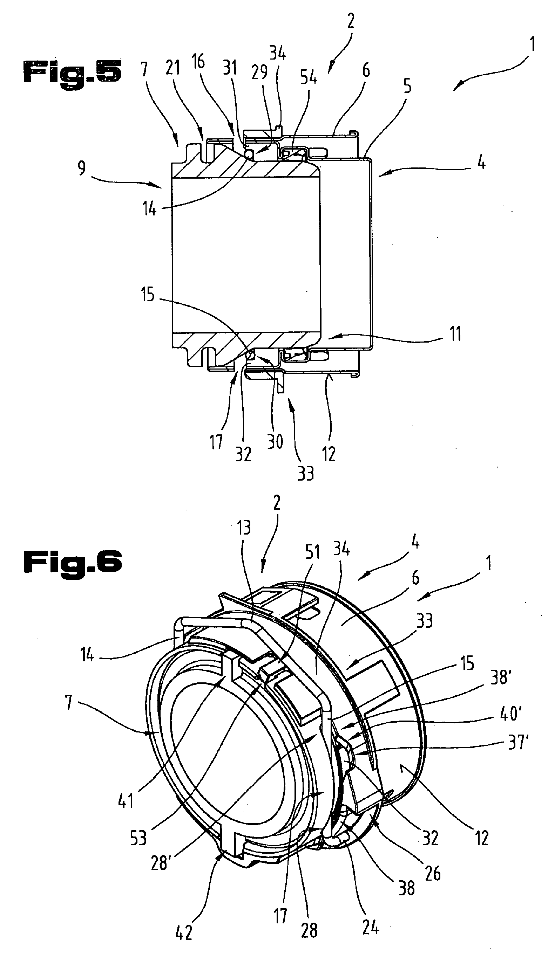

Durch die Deaktivierung der Entsperrvorrichtung 33 wird eine Positionierung der Rastfeder 13 in der gesperrten Position zugelassen und bei einem Einsteckversuch mit dem zweiten Steckverbinder 7 ist daher die Rastfeder 13 entweder bereits in der gesperrten Position positioniert oder die Rastfeder 13 wird durch die Anlaufschräge 22 des zweiten Steckverbinders 7 in die gesperrte Position bewegt, wodurch die Halteabschnitte 19, 20 der Rastfeder 13 von den vorspringenden Abschnitten 31, 32 des ersten Steckverbinders 2 relativ zum ersten Steckverbinder 2 in einer Bewegung radial nach außen blockiert werden und ein vollständiges Einstecken des zweiten Steckverbinders 7 in den ersten Steckverbinder 2 verunmöglicht wird. In dem in den Fig. 1 bis 5 dargestellten Zustand der Steckverbindung 1 erlaubt die Entsperrvorrichtung 33 eine Positionierung der Rastfeder 13 in der gesperrten Position und die Rastfeder 13 befindet sich auch in dieser gesperrten Position. In der Schnittdarstellung in Fig. 5 ist gezeigt, wie weit der zweite Steckverbinder 7 bei einer gesperrten Rastfeder 13 in den ersten Steckverbinder 2 eingesteckt werden kann, bis die gesperrte Rastfeder 13 bzw. deren blockierte Halteabschnitte 19, 20 ein weiteres bzw. vollständiges Einstecken des zweiten Steckverbinders 7 verhindern.

Wird nun mittels einer Befestigungsvorrichtung eine Leitung an der Befestigungsseite 4 des ersten Steckverbinders 2 abdichtend angebracht und dabei die Innenwandung 5 im Bereich der Befestigungsseite 4 des ersten Steckverbinders 2 verpresst, so wird, sofern der Verpressvorgang erfolgreich durchgeführt werden konnte - was insbesondere vollautomatisch von der Befestigungsvorrichtung festgestellt wird, die Entsperrvorrichtung 33 der Rastfeder 13 aktiviert, wodurch die Rastfeder 13 in die entsperrte Position bewegt bzw. dort gehalten wird. Befindet sich die Rastfeder 13 zuvor in der gesperrten Position und wird die Entsperrvorrichtung 33 durch Drehen des Rings 34 aktiviert, so bewegen sich die weniger stark vertieften Abschnitte 36, 36', 38, 38' des Rings 34 über die Ausnehmungen 29, 29`, 30, 30` der Schlitze 16, 17, wodurch die Ausnehmungen 29, 29`, 30, 30' verdeckt werden und die Schenkel 14, 15' entlang der jeweils zwischen den stärker vertieften Abschnitten 35, 35`, 37, 37` und den weniger stark vertieften Abschnitten 36, 36`, 38, 38' verlaufenden Schräge 39, 39`, 40, 40` aus den Ausnehmungen 29, 29', 30, 30' herausbewegt werden. Somit werden die Schenkel 14, 15 bzw. die Halteabschnitte 19, 20 der Rastfeder 13 aus den Ausnehmungen 29, 29`, 30, 30' heraus und in eine Ebene mit den Schlitzen 16, 17 verschoben, und die vorspringenden Abschnitte 31, 32 des ersten Steckverbinders 2 im Bereich der Schlitze 16, 17 behindern eine radial nach außen gerichtete Bewegung der Halteabschnitte 19, 20 der Rastfeder 13 nicht mehr.

Aus diesem Grund kann die Anlaufschräge 22 des zweiten Steckverbinders bei einem Einsteckversuch die Halteabschnitte 19, 20 der Rastfeder 13 relativ zum ersten Steckverbinder 2 radial nach außen bewegen bzw. drücken und der zweite Steckverbinder 7 kann vollständig in den ersten Steckverbinder 2 eingesteckt werden. Nach dem vollständigen Einstecken des zweiten Steckverbinders 7 in den ersten Steckverbinder bewegt sich die auseinandergedrückte und angespannte Rastfeder 13 in ihre ursprüngliche Position zurück und greift dabei mit ihren Halteabschnitten 19, 20 in die Nut 21 des zweiten Steckverbinders 7 ein, wodurch dieser im ersten Steckverbinder 2 arretiert wird. Dieser verbundene Zustand der Steckverbindung 1 ist besonders gut in der Fig. 8 ersichtlich. In den Fig. 6 bis 9 ist die Steckverbindung 1 in einem Zustand dargestellt, in welchem die Entsperrvorrichtung 33 aktiviert ist und dadurch gewissermaßen die Verriegelung der Rastfeder 13 "entschärft" wurde.

Besonders zweckmäßig ist es, wenn während oder unmittelbar nach einer erfolgreichen Befestigung der Leitung an der Befestigungsseite 4 des ersten Steckverbinders 2 mittels der Befestigungsvorrichtung die Aktivierung der Entsperrvorrichtung 33 ebenso von der Befestigungsvorrichtung durchgeführt wird. Dies geschieht auf besonders einfache und schnelle Art und Weise dadurch, dass die Befestigungsvorrichtung den Ring 34 der Entsperrvorrichtung 33 verdreht, sodass die Entsperrvorrichtung 33 von dem deaktivierten Zustand in den aktivierten Zustand wechselt.

Gemäß einer besonders zweckmäßigen Ausführungsform ist der zweite Steckverbinder 7 an der Außenseite 10 mit zumindest einem, wie in Fig. 1 gezeigt vorzugsweise mit zwei axial ausgerichteten Vorsprüngen 41, 42 ausgestattet. Korrespondierend dazu weist der drehbewegliche Ring 34 der Entsperrvorrichtung 33 jeweils einen ersten Nutabschnitt 43, 44 auf, der bei einer aktivierten Entsperrvorrichtung 33 in radialer Richtung fluchtend mit jeweils einem zweiten Nutabschnitt 45, 46 im ersten Steckverbinder 2 ausgerichtet ist und welcher jeweilige erste Nutabschnitt 43, 44 bei einer durch eine Verdrehung des Rings 34 deaktivierten Entsperrvorrichtung 33 vom jeweiligen zweiten Nutabschnitt 45, 46 entlang des Außenumfang des ersten Steckverbinders 2 beabstandet positioniert ist.

Somit bildet bei einer aktivierten Entsperrvorrichtung 33 jeweils ein erster Nutabschnitt 43, 44 und ein dazu radial fluchtend angeordneter, zweiter Nutabschnitt 45, 46 jeweils eine axial ausgerichtete Nut 47, 48 mit jeweils einer Stirnseitenöffnung 49, 50 an der Einsteckseite 3 des ersten Steckverbinders 2 aus, wie dies am besten in den Fig. 6 und 9 ersichtlich ist, und die axial ausgerichteten Vorsprünge 41, 42 des zweiten Steckverbinders 7 können in die korrespondieren, axial ausgerichteten Nuten 47, 48 an der Einsteckseite 3 des ersten Steckverbinders 2 eingeschoben werden und in weiterer Folge kann der zweite Steckverbinder 7 in den ersten Steckverbinder 2 eingesteckt werden.

Ist nun die Entsperrvorrichtung 33 deaktiviert und damit der Ring 34 verdreht, sodass der jeweilige erste Nutabschnitt 43, 44 im Ring 34 nicht radial fluchtend zum jeweiligen zweiten Nutabschnitt 45, 46 im ersten Steckverbinder 2 ausgerichtet ist, so ist die jeweilige Nut 47, 48 zur Aufnahme des jeweiligen Vorsprungs 41, 42 blockiert bzw. gar nicht vorhanden und ein Einstecken des zweiten Steckverbinders 7 in den ersten Steckverbinder 2 wird neben der blockierten Rastfeder 13 auch dadurch verhindert.

Darüber hinaus dienen die Vorsprünge 41, 42 am zweiten Steckverbinder 7 auch als Verdrehsicherung im ersten Steckverbinder 2.

Gemäß einer weiteren, zweckmäßigen Ausführungsform der Steckverbindung 1 ist die Entsperrvorrichtung 33 bzw. der Ring 34 mit einem Haltevorsprung 51 ausgestattet, welcher Haltevorsprung 51 bei einer deaktivieren Entsperrvorrichtung 33 in eine erste Haltenut 52 eingreift und bei einer aktivierten Entsperrvorrichtung 33 in eine zweite Haltenut 53 eingreift, wobei der Haltevorsprung 51 aus der jeweiligen Haltenut 52, 53 durch eine mechanische Kraft herausbewegbar bzw. biegbar ist und zusammen mit dem Ring 34 der Entsperrvorrichtung 33 jeweils über eine bestimmte Haltenut 52, 53 bewegbar ist. Sobald der Haltevorsprung 51 fluchtend über einer der Haltenuten 52, 53 angeordnet ist und keine mechanische Kraft mehr auf den Haltevorsprung 51 ausgeübt wird, so bewegt sich der Haltevorsprung 51 aufgrund seiner Vorspannung in die jeweilige Haltenut 52, 53 hinein und arretiert den Ring 34 der Entsperrvorrichtung 33 im jeweils gerade gewählten, aktivierten oder deaktivierten Zustand.

Gemäß einer besonders zweckmäßigen Ausführungsform ist in einer Nut der Innenwandung 5 des ersten Steckverbinders 2 ein radial nach innen ragendes Dichtungselement 54 angeordnet, welches, wie am besten in Fig. 8 ersichtlich ist, bei einem eingesteckten zweiten Steckverbinder 7 an der Außenseite 10 des zweiten Steckverbinders 7 anliegt und die beiden Steckverbinder 2, 7 zueinander bzw. die Steckverbindung 1 abdichtet.

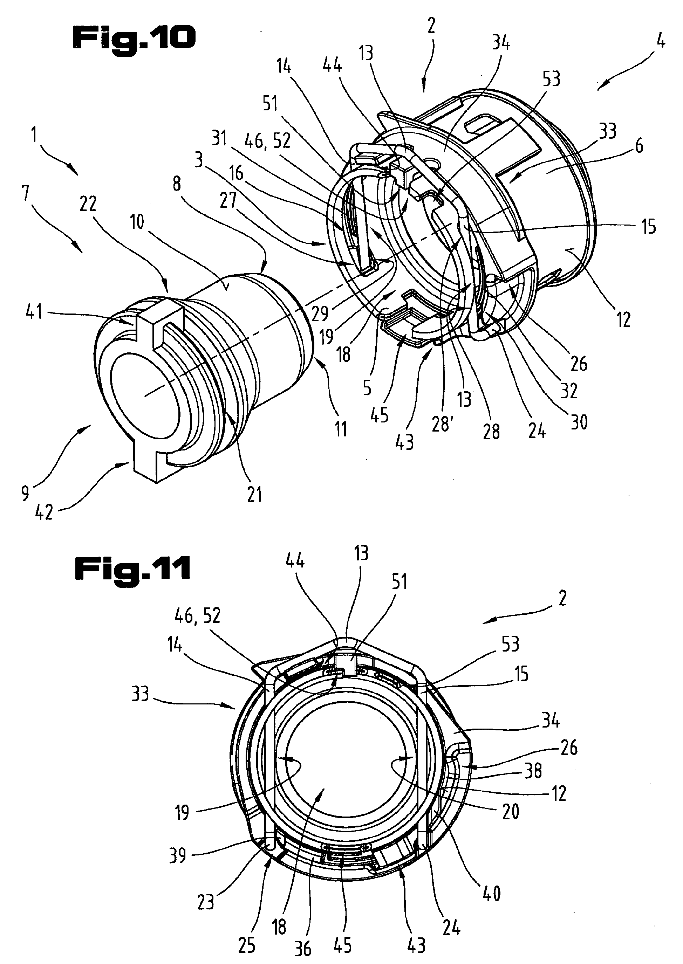

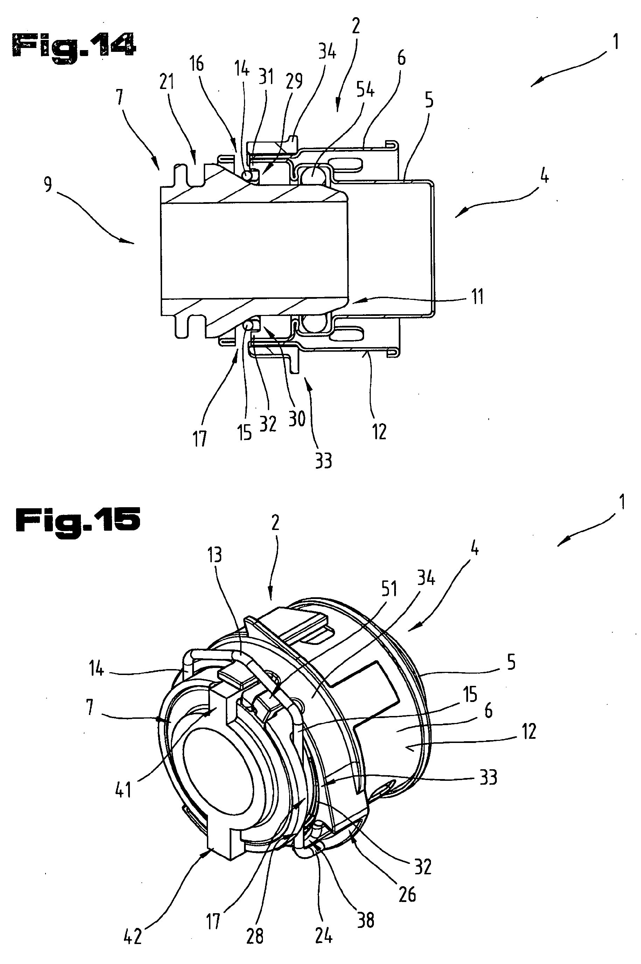

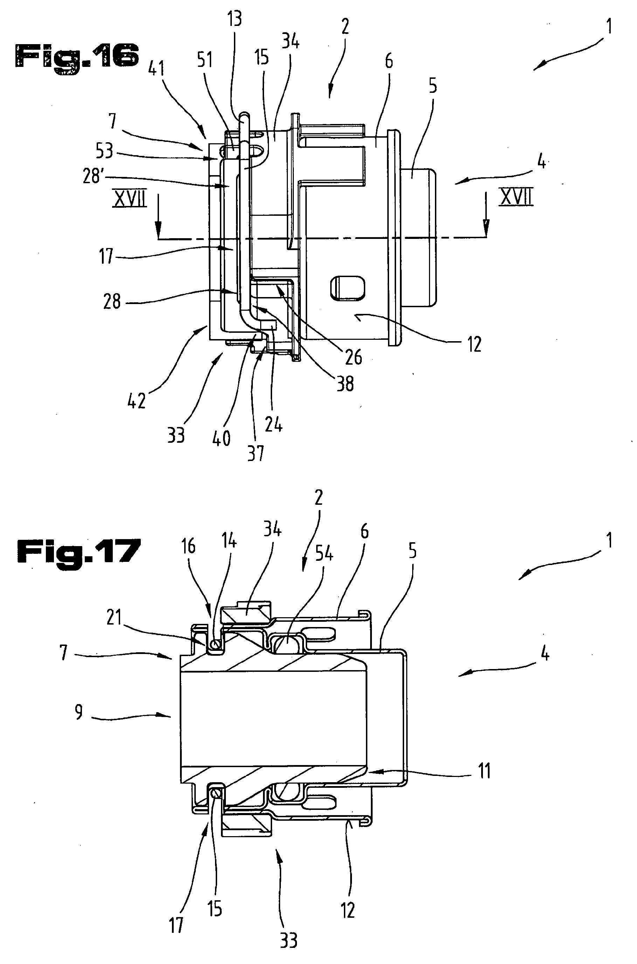

In den Fig. 10 bis 17 ist eine weitere Ausführungsform der Steckverbindung 1 gezeigt, wobei wiederum für gleiche Teile gleiche Bezugszeichen bzw. Bauteilbezeichnungen wie in den vorangegangenen Fig. 1 bis 9 verwendet werden. Um unnötige Wiederholungen zu vermeiden, wird auf die detaillierte Beschreibung für die vorangegangenen Fig. 1 bis 9 hingewiesen bzw. Bezug genommen. Das in den Fig. 10 bis 17 dargestellte, weitere Ausführungsbeispiel der Steckverbindung 1 unterscheidet sich zum zuvor beschriebenen Ausführungsbeispiel in den Fig. 1 bis 9 grundsätzlich durch die Abmessungen bzw. Dimensionen der Komponenten der Steckverbindung 1. Wesentlich ist jedoch, dass gemäß dieser weiteren Ausführungsform der Steckverbindung 1 bei einer deaktivierten Entsperrvorrichtung 33 nur jeweils eine Ausnehmung 29, 30 pro Schlitz 16, 17 von den stärker vertieften Abschnitten 35, 37 des Rings 34 der Entsperrvorrichtung 33 zugänglich gemacht wird.

Dies geschieht entweder, wie in der Ausführungsform in den Fig. 10 bis 17 dargestellt, dadurch, dass der Ring 34 der Entsperrvorrichtung 33 unterschiedlich vertiefte Abschnitte 35, 36, 37, 38 nur im Bereich dieser Ausnehmungen 29, 30 der Schlitze 16, 17 aufweist, oder alternativ auch dadurch, dass ein Schlitz 16, 17 jeweils nur genau eine Ausnehmung 29, 30 in einem Endbereich 27, 28 aufweist.

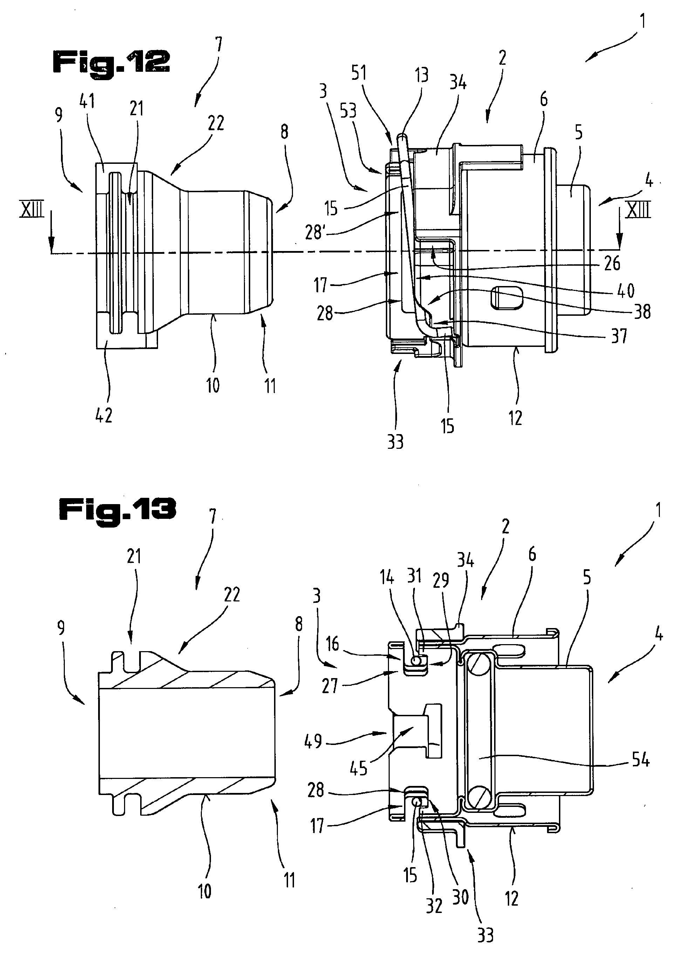

Dabei ist es auch notwendig, dass die beiden bei einer deaktivierten Entsperrvorrichtung 33 zugänglichen Ausnehmungen 29, 30 entlang der senkrechten Längsmittebene des ersten Steckverbinders 2 - siehe Fig. 10 - gespiegelt im jeweiligen Endbereich 27, 28 der Schlitze 16, 17 angeordnet sind, sodass bei einer deaktivierten Entsperrvorrichtung die Rastfeder 13 bzw. deren Schenkel 14, 15 schräg zu einer senkrechten Querschnittsebene des ersten Steckverbinders 2 positioniert werden können und die Halteabschnitte 19, 20 der Rastfeder 13 gegen eine Bewegung radial nach außen blockiert sind, wie dies am besten in Fig. 12 ersichtlich ist.

Der Ordnung halber sei abschließend darauf hingewiesen, dass zum besseren Verständnis des Aufbaus der Steckverbindung diese bzw. deren Bestandteile teilweise unmaßstäblich und/oder vergrößert und/oder verkleinert dargestellt wurden.

Die Ausführungsbeispiele zeigen mögliche Ausführungsvarianten der Steckverbindung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem' technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1 bis 9; 10 bis 17 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Steckverbindung | 36, 36' | Abschnitt |
| 2 | Erster Steckverbinder | 37, 37' | Abschnitt |
| 3 | Einsteckseite | 38, 38' | Abschnitt |
| 4 | Befestigungsseite | 39, 39' | Schräge |
| 5 | Innenwandung | 40, 40' | Schräge |
| | | | |
| 6 | Außenwandung | 41 | Vorsprung |
| 7 | Zweiter Steckverbinder | 42 | Vorsprung |
| 8 | Einsteckseite | 43 | Erster Nutabschnitt |
| 9 | Befestigungsseite | 44 | Erster Nutabschnitt |
| 10 | Außenseite | 45 | Zweiter Nutabschnitt |
| | | | |
| 11 | Schräge | 46 | Zweiter Nutabschnitt |
| 12 | Außenseite | 47 | Nut |
| 13 | Rastfeder | 48 | Nut |
| 14 | Schenkel | 49 | Stirnseitenöffnung |
| 15 | Schenkel | 50 | Stirnseitenöffnung |
| | | | |
| 16 | Schlitz | 51 | Haltevorsprung |
| 17 | Schlitz | 52 | Erste Haltenut |
| 18 | Innenbereich | 53 | Zweite Haltenut |
| 19 | Halteabschnitt | 54 | Dichtungselement |
| 20 | Halteabschnitt | | |
| | | | |
| 21 | Nut | | |
| 22 | Anlaufschräge | | |
| 23 | Endabschnitt | | |
| 24 | Endabschnitt | | |
| 25 | Haltevorrichtung | | |
| | | | |
| 26 | Haltevorrichtung | | |
| 27, 27' | Endbereich | | |
| 28, 28` | Endbereich | | |
| 29, 29` | Ausnehmung | | |
| 30, 30` | Ausnehmung | | |
| | | | |
| 31 | Abschnitt | | |
| 32 | Abschnitt | | |
| 33 | Entsperrvorrichtung | | |
| 34 | Ring | | |
| 35, 35' | Abschnitt | | |

## Patentansprüche

1. Steckverbindung (1) zum Verbinden von Leitungen für unter Druck gesetzte Flüssigkeiten oder Gase umfassend einen ersten Steckverbinder (2) mit einer Einsteckseite (3) und einer axial gegenüberliegenden Befestigungsseite (4), einen zweiten Steckverbinder (7) mit einer Einsteckseite (8) und einer axial gegenüberliegenden Befestigungsseite (9), wobei der zweite Steckverbinder (7) mit seiner Einsteckseite (8) in den ersten Steckverbinder (2) über dessen Einsteckseite (3) einsteckbar ist, und eine am ersten Steckverbinder (2) befestigte Rastfeder (13), welche in einer geschlossenen Position am ersten Steckverbinder (2) und bei einem eingesteckten zweiten Steckverbinder (7) mit zumindest einem Halteabschnitt (19, 20) in eine in einer Außenseite (10) des zweiten Steckverbinders (7) radial umlaufenden Nut (21) eingreift, sodass ein Loslösen des in den ersten Steckverbinder (2) eingesteckten zweiten Steckverbinders (7) unterbunden ist, und wobei zwischen der Einsteckseite (8) und der Nut (21) des zweiten Steckverbinders (7), vorzugsweise unmittelbar vor der Nut (21), eine radial umlaufende Anlaufschräge (22) für den zumindest einen Halteabschnitt (19, 20) der Rastfeder (13) ausgebildet ist, **dadurch gekennzeichnet, dass** die Rastfeder (13) in der geschlossenen Position am ersten Steckverbinder (2) von einer gesperrten Position, in welcher Position der zumindest eine Halteabschnitt (19, 20) relativ zum ersten Steckverbinder (2) in einer Bewegung radial nach außen blockiert ist, in eine entsperrte Position bewegbar ist, in welcher Position die Bewegung des zumindest einen Halteabschnitts (19, 20) radial nach außen freigegeben ist, und dass am ersten Steckverbinder (2) eine wahlweise aktivierbare Entsperrvorrichtung (33) angeordnet ist, wobei die deaktivierte Entsperrvorrichtung (33) eine Positionierung der Rastfeder (13) in der gesperrten Position zulässt und die aktivierte Entsperrvorrichtung (33) die Rastfeder (13) in der entsperrten Position hält.

2. Steckverbindung nach Anspruch 1, **dadurch gekennzeichnet, dass** die Rastfeder (13) im Wesentlichen an einer Außenseite (12) des ersten Steckverbinders (2) angeordnet ist und zumindest einen Schenkel (14, 15) umfasst, welcher Schenkel (14, 15) bei geschlossener Rastfeder (13) durch einen radial in einem Teilabschnitt des ersten Steckverbinders (2) umlaufenden Schlitz (16, 17) in einen Innenbereich (18) des ersten Steckverbinders (2) hineinragt und den zumindest einen Halteabschnitt (19, 20) bildet, wobei der Schlitz (16, 17) in einem seiner beiden Endbereiche (27, 27`, 28, 28') eine von der Einsteckseite (3) des ersten Steckverbinders (2) abgewandte Ausnehmung (29, 29', 30, 30') bzw. Verbreiterung zur Aufnahme des zumindest einen Schenkels (14, 15) der Rastfeder (13) aufweist, welche Ausnehmung (29, 29`, 30, 30') sich über weniger als die Hälfte der Längsausdehnung des Schlitzes (16, 17) erstrecken, und dass die Entsperrvorrichtung (33) im Wesentlichen an der Außenseite (12) des ersten Steckverbinders (2) angeordnet ist und einen entlang der Längsausdehnung des Schlitzes (16, 17) drehbeweglichen Ring (34) umfasst, welcher Ring (34) im Bereich der Ausnehmung (29, 29`, 30, 30`) des Schlitzes (16, 17) zwei in axialer Richtung zur Befestigungsseite (4) des ersten Steckverbinders (2) hin betrachtet unterschiedlich vertiefte Abschnitte (35, 36, 35', 36', 37, 38, 37', 38') vorzugsweise mit einer dazwischen verlaufenden Schräge (39, 39`, 40, 40`) aufweist, wobei durch Drehung des Rings (34) entweder der stärker vertiefte Abschnitt (35, 35`, 37, 37') über die Ausnehmung (29, 29`, 30, 30') bewegbar ist, sodass die Ausnehmung (29, 29', 30, 30') freigelegt ist und die Entsperrvorrichtung (33) deaktiviert ist, oder der weniger stark vertiefte Abschnitt (36, 36', 38, 38') über die Ausnehmung (29, 29`, 30, 30`) bewegbar ist, sodass die Ausnehmung (29, 29`, 30, 30') verdeckt ist und die Entsperrvorrichtung (33) aktiviert ist.

3. Steckverbindung nach Anspruch 2, **dadurch gekennzeichnet, dass** mehrere Schlitze (16, 17) und eine Rastfeder (13) mit mehreren, entsprechenden Halteabschnitten (19, 20), insbesondere zwei gegenüberliegende Schlitze (16, 17) mit gespiegelt angeordneten Ausnehmungen (29, 29', 30, 30') und eine Rastfeder (13) mit zwei Schenkeln (14, 15) bzw. Halteabschnitten (19, 20), ausgebildet sind.

4. Steckverbindung nach Anspruch 2 oder 3, **dadurch gekennzeichnet, dass** der jeweilige Schlitz (16, 17) im ersten Steckverbinder (2) in beiden Endbereichen (27, 27', 28, 28') jeweils eine sich über weniger als die Hälfte der Längsausdehnung des Schlitzes (16, 17) erstreckende Ausnehmung (29, 29`, 30, 30`) aufweist und der drehbewegliche Ring (34) im Bereich einer Ausnehmung (29, 29`, 30, 30') jeweils zwei in axialer Richtung zur Befestigungsseite (4) des ersten Steckverbinders (2) hin betrachtet unterschiedlich vertiefte Abschnitte (35, 36, 35`, 36`, 37, 38, 37', 38') vorzugsweise mit einer dazwischen verlaufenden Schräge (39, 39`, 40, 40`) aufweist.

5. Steckverbindung nach einem der Ansprüche 2 bis 4, **dadurch gekennzeichnet, dass** ein Abschnitt (31, 32) des ersten Steckverbinders (2), welcher Abschnitt (31, 32) unmittelbar neben dem Schlitz (16, 17) in Richtung zur Befestigungsseite (4) des ersten Steckverbinders (2) liegt, durch einen insbesondere mehrlagigen Blechteil gebildet ist.

6. Steckverbindung nach einem der vorhergehenden Ansprüche, **dadurch gekennzeichnet, dass** zumindest ein axial ausgerichteter Vorsprung (41, 42) an der Außenseite (10) des zweiten Steckverbinders (7) ausgebildet ist, welcher Vorsprung (41, 42) beim Einstecken des zweiten Steckverbinders (7) in den ersten Steckverbinder (2) in zumindest eine korrespondierende, axial ausgerichtete Nut (47, 48) mit einer Stirnseitenöffnung (49, 50) an der Einsteckseite (3) des ersten Steckverbinders (2) einschiebbar ist, wenn die Entsperrvorrichtung (33) aktiviert ist, und dass das Einschieben des zumindest einen Vorsprungs (41, 42) in die zumindest eine Nut (47, 48) von der deaktivierten Entsperrvorrichtung (33) blockiert ist.

7. Steckverbindung nach Anspruch 6, **dadurch gekennzeichnet, dass** die Entsperrvorrichtung (33) im Wesentlichen an der Außenseite (12) des ersten Steckverbinders (2) angeordnet ist und einen entlang des Außenumfangs des ersten Steckverbinders (2) drehbeweglichen Ring (34) umfasst, welcher Ring (34) einen ersten Nutabschnitt (43, 44) aufweist, der bei einer aktivierten Entsperrvorrichtung (33) in radialer Richtung fluchtend mit einem zweiten Nutabschnitt (45, 46) im ersten Steckverbinder (2) ausgerichtet ist und welcher erste Nutabschnitt (43, 44) bei einer durch eine Verdrehung des Rings (34) deaktivierten Entsperrvorrichtung (33) vom zweiten Nutabschnitt (45, 46) entlang des Außenumfangs des ersten Steckverbinders (2) beabstandet positioniert ist.

8. Steckverbindung nach einem der vorhergehenden Ansprüche, **dadurch gekennzeichnet, dass** ein Haltevorsprung (51) der Entsperrvorrichtung (33) bei einer deaktivierten Entsperrvorrichtung (33) in eine erste Haltenut (52) und bei einer aktivierten Entsperrvorrichtung (33) in eine zweite Haltenut (53) eingreift und dass der Haltevorsprung (51) insbesondere durch einen mechanische Kraftaufwand aus der jeweiligen Haltenut (52, 53) herausbewegbar und zusammen mit der Entsperrvorrichtung (33) zur jeweils anderen Haltenut (53, 52) weiterbewegbar ist.

9. Steckverbindung nach einem der vorhergehenden Ansprüche, **dadurch gekennzeichnet, dass** die Rastfeder (13) von der geschlossenen Position am ersten Steckverbinder (2) in eine geöffnete Position am ersten Steckverbinder (2) bewegbar ist, in welcher geöffneten Position der zumindest eine Halteabschnitt (19, 20) der Rastfeder (13) außerhalb der Nut (21) in der Außenseite (10) eines eingesteckten zweiten Steckverbinders (7) angeordnet ist.

10. Verfahren zur Verwendung einer Steckverbindung (1) nach einem der vorhergehenden Ansprüche, **dadurch gekennzeichnet, dass** vor der Verwendung jedes ersten Steckverbinders (2) die Rastfeder (13) gegebenenfalls geschlossen und die Entsperrvorrichtung (33) deaktiviert wird, wodurch eine Positionierung der Rastfeder (13) in der gesperrten Position zugelassen wird, und wobei bei einem Einsteckversuch mit dem zweiten Steckverbinder (7) die Rastfeder (13) entweder bereits in der gesperrten Position positioniert ist oder durch die Anlaufschräge (22) des zweiten Steckverbinders (7) in die gesperrte Position bewegt wird, sodass der zumindest eine Halteabschnitt (19, 20) der Rastfeder (13) relativ zum ersten Steckverbinder (2) in einer Bewegung radial nach außen blockiert wird und ein vollständiges Einstecken des zweiten Steckverbinders (7) in den ersten Steckverbinder (2) verunmöglicht wird, und dass während oder unmittelbar nach einer erfolgreichen Befestigung einer Leitung an der Befestigungsseite (4) des ersten Steckverbinders (2) mittels einer Befestigungsvorrichtung die Entsperrvorrichtung (33) der Rastfeder (13) aktiviert wird, wodurch die Rastfeder (13) in die entsperrte Position bewegt bzw. dort gehalten wird, und wobei bei einem Einsteckversuch mit dem zweiten Steckverbinder (7) der zumindest eine Halteabschnitt (19, 20) der Rastfeder (13) durch die Anlaufschräge (22) des zweiten Steckverbinders (7) relativ zum ersten Steckverbinder (2) radial nach außen bewegt wird und der zweite Steckverbinder (7) vollständig in den ersten Steckverbinder (2) eingesteckt und durch den zumindest einen Halteabschnitt (19, 20), welcher daraufhin in die Nut (21) des zweiten Steckverbinders (7) eingreifen kann, arretiert wird.

11. Verfahren zur Verwendung einer Steckverbindung (1) nach einem der Ansprüche 2 bis 5, **dadurch gekennzeichnet, dass** vor der Verwendung jedes ersten Steckverbinders (2) die Rastfeder (13) gegebenenfalls geschlossen und die Entsperrvorrichtung (33) deaktiviert wird, indem durch Drehen des Rings (34) an der Außenseite (12) des ersten Steckverbinders (2) jeweils der stärker vertiefte Abschnitt (35, 35`, 37, 37') des Rings (34) über die jeweilige Ausnehmung (29, 29`, 30, 30`) des Schlitzes (16, 17) des ersten Steckverbinders (2) bewegt wird, wodurch die zumindest eine Ausnehmung (29, 29`, 30, 30') freigelegt wird und eine Positionierung des zumindest einen Schenkels (14, 15) der Rastfeder (13) in der zumindest einen Ausnehmung (29, 29`, 30, 30`) zugelassen wird, und wobei bei einem Einsteckversuch mit dem zweiten Steckverbinder (7) der zumindest eine Schenkel (14, 15) entweder bereits in der zumindest einen Ausnehmung (29, 29`, 30, 30`) positioniert ist oder durch die Anlaufschräge (22) des zweiten Steckverbinders (7) in die zumindest eine Ausnehmung (29, 29`, 30, 30') hineinbewegt wird, sodass der zumindest eine Schenkel (14, 15) relativ zum ersten Steckverbinder (2) in einer Bewegung radial nach außen blockiert wird und ein vollständiges Einstecken des zweiten Steckverbinders (7) in den ersten Steckverbinder (2) verunmöglicht wird, und dass während oder unmittelbar nach einer erfolgreichen Befestigung einer Leitung an der Befestigungsseite (4) des ersten Steckverbinders (2) mittels einer Befestigungsvorrichtung die Entsperrvorrichtung (33) der Rastfeder (13) aktiviert wird, indem durch Drehen des Rings (34) jeweils der weniger stark vertiefte Abschnitt (36, 36', 38, 38') des Rings (34) über die jeweilige Ausnehmung (29, 29`, 30, 30`) des Schlitzes (16, 17) bewegt wird, wodurch die zumindest eine Ausnehmung (29, 29', 30, 30') verdeckt wird und der zumindest eine Schenkel (14, 15) vorzugsweise entlang der zwischen dem stärker vertieften Abschnitt (35, 35`, 37, 37') und dem weniger stark vertieften Abschnitt (36, 36', 38, 38') verlaufenden Schräge (39, 39`, 40, 40`) aus der zumindest einen Ausnehmungen (29, 29', 30, 30') herausbewegt wird oder der zumindest eine Schenkel (14, 15) außerhalb der zumindest einen Ausnehmungen (29, 29`, 30, 30`) gehalten wird, und wobei bei einem Einsteckversuch mit dem zweiten Steckverbinder (7) der zumindest eine Schenkel (14, 15) durch die Anlaufschräge (22) des zweiten Steckverbinders (7) relativ zum ersten Steckverbinder (2) radial nach außen bewegt wird und der zweite Steckverbinder (7) vollständig in den ersten Steckverbinder (2) eingesteckt und durch den zumindest einen Schenkel (14, 15), welcher daraufhin in die Nut (21) des zweiten Steckverbinders (7) eingreifen kann, arretiert wird.

12. Verfahren nach einem der Ansprüche 10 oder 11, **dadurch gekennzeichnet, dass** während oder unmittelbar nach einer erfolgreichen Befestigung der Leitung an der Befestigungsseite (4) des ersten Steckverbinders (2) die Aktivierung der Entsperrvorrichtung (33) von der Befestigungsvorrichtung für die Leitung durchgeführt wird.

## Claims

1. Plug connection (1) for connecting lines for pressurized liquids or gases, comprising a first plug connector (2) having an insertion end (3) and a fixing end (4) lying axially opposite, a second plug connector (7) having an insertion end (8) and a fixing end (9) lying axially opposite, wherein the second plug connector (7) can be inserted by its insertion end (8) in the first plug connector (2) via its insertion end (3), and a detent spring (13) fastened to the first plug connector (2) which, in a closed position on the first plug connector (2) and when a second plug connector (7) is inserted, engages in a radially extending groove (21) in an external face (10) of the second plug connector (7) by means of at least one retaining portion (19, 20) so that the second plug connector (7) inserted in the first plug connector (2) is prevented from becoming loose, and wherein a radially extending bevel ramp (22) for the at least one retaining portion (19, 20) of the detent spring (13) is provided between the insertion end (8) and the groove (21) of the second plug connector (7), preferably directly in front of the groove (21), **characterized in that** the detent spring (13) in the closed position on the first plug connector (2) can be moved from a locked position, in which position the at least one retaining portion (19, 20) is blocked in a movement radially outwards relative to the first plug connector (2), into an unlocked position, in which position the movement of the at least one retaining portion (19, 20) radially outwards is released, and that a release device (33) which can be selectively activated is disposed on the first plug connector (2), wherein the deactivated release device (33) enables the detent spring (13) to be positioned in the locked position and the activated release device (33) holds the detent spring (13) in the unlocked position.

2. Plug connection according to claim 1, **characterized in that** the detent spring (13) is substantially disposed on an external face (12) of the first plug connector (2) and comprises at least one arm (14, 15), which arm (14, 15) extends through a radially extending slot (16, 17) in a part-portion of the first plug connector (2) into an inner region (18) of the first plug connector (2) when the detent spring (13) is closed and forms the at least one retaining portion (19, 20), wherein the slot (16, 17) has a recess (29, 29', 30, 30') or wider region facing away from the insertion end (3) of the first plug connector (2) in one of its two end regions (27, 27', 28, 28') for accommodating the at least one arm (14, 15) of the detent spring (13), which recess (29, 29`, 30, 30`) extends across less than half the longitudinal extension of the slot (16, 17), and that the release device (33) is substantially disposed on the external face (12) of the first plug connector (2) and comprises a ring (34) rotatable along the longitudinal extension of the slot (16, 17), which ring (34) has two differently recessed portions (35, 36, 35', 36', 37, 38, 37', 38') in the region of the recess (29, 29`, 30, 30`) of the slot (16, 17) towards the fixing end (4) of the first plug connector (2) as viewed in the axial direction, preferably with a bevel (39, 39', 40, 40') extending in between, wherein by rotating the ring (34), either the more deeply recessed portion (35, 35', 37, 37') can be moved above the recess (29, 29`, 30, 30`) so that the recess (29, 29`, 30, 30`) is exposed and the release device (33) is deactivated or the less deeply recessed portion (36, 36', 38, 38`) can be moved above the recess (29, 29', 30, 30') so that the recess (29, 29', 30, 30') is covered and the release device (33) is activated.

3. Plug connection according to claim 2, **characterized in that** a plurality of slots (16, 17) and a detent spring (13) with a plurality of corresponding retaining portions (19, 20) are provided, in particular two oppositely lying slots (16, 17) with recesses (29, 29', 30, 30') disposed in mirror image and a detent spring (13) with two arms (14, 15) and retaining portions (19, 20).

4. Plug connection according to claim 2 or 3, **characterized in that** the respective slot (16, 17) in the first plug connector (2) has a recess (29, 29`, 30, 30`) respectively extending across less than half the longitudinal extension of the slot (16, 17) in two end regions (27, 27', 28, 28') and the rotatable ring (34) has respectively two differently recessed portions (35, 36, 35', 36', 37, 38, 37', 38') in the region of a recess (29, 29', 30, 30') towards the fixing end (4) of the first plug connector (2) as viewed in the axial direction, preferably with a bevel (39, 39', 40, 40') extending in between.

5. Plug connection according to any one of claims 2 to 4, **characterized in that** a portion (31, 32) of the first plug connector (2), which portion (31, 32) lies directly adjacent to the slot (16, 17) in the direction towards the fixing end (4) of the first plug connector (2), is provided in the form of a multi-layered sheet metal part in particular.

6. Plug connection according to any one of the preceding claims, **characterized in that** at least one axially oriented projection (41, 42) is provided on the external face (10) of the second plug connector (7), which projection (41, 42) can be pushed into at least one corresponding axially oriented groove (47, 48) with an end face opening (49, 50) at the insertion end (3) of the first plug connector (2) if the release device (33) is activated when the second plug connector (7) is being inserted in the first plug connector (2), and that the at least one projection (41, 42) is prevented from being pushed into the at least one groove (47, 48) by the deactivated release device (33).

7. Plug connection according to claim 6, **characterized in that** the release device (33) is substantially disposed on the external face (12) of the first plug connector (2) and comprises a ring (34) rotatable along the external circumference of the first plug connector (2), which ring (34) has a first groove portion (43, 44) which is oriented in the radial direction in alignment with a second groove portion (45, 46) in the first plug connector (2) when the release device (33) is activated, and which first groove portion (43, 44) is positioned at a distance from the second groove portion (45, 46) along the external circumferences of the first plug connector (2) when the release device (33) is deactivated by turning the ring (34).

8. Plug connection according to any one of the preceding claims, **characterized in that** a retaining lug (51) of the release device (33) engages in a first retaining groove (52) when the release device (33) is deactivated and in a second retaining groove (53) when the release device (33) is activated, and the retaining lug (51) can be moved out of the respective retaining groove (52, 53), in particular by applying a mechanical force, and can be moved farther together with the release device (33) to the other respective retaining groove (53, 52).

9. Plug connection according to any one of the preceding claims, **characterized in that** the detent spring (13) can be moved from the closed position on the first plug connector (2) into an open position on the first plug connector (2), in which open position the at least one retaining portion (19, 20) of the detent spring (13) is disposed outside the groove (21) in the external face (10) of an inserted second plug connector (7).

10. Method of using a plug connection (1) according to any one of the preceding claims, **characterized in that** before using each first plug connector (2), the detent spring (13) is optionally closed and the release device (33) is deactivated to enable the detent spring (13) to be positioned in the locked position, and wherein in the event of an attempt to insert the second plug connector (7), the detent spring (13) is either already positioned in the locked position or is moved into the locked position by the bevel ramp (22) of the second plug connector (7) so that the at least one retaining portion (19, 20) of the detent spring (13) is prevented from effecting a movement radially outwards relative to the first plug connector (2) and making full insertion of the second plug connector (7) in the first plug connector (2) impossible, and during or immediately after a line has been successfully fitted to the fixing end (4) of the first plug connector (2) by means of a fitting device, the release device (33) of the detent spring (13) is activated so that the detent spring (13) is moved into the unlocked position or is held there, and wherein in the event of an attempt to insert the second plug connector (7), the at least one retaining portion (19, 20) of the detent spring (13) is moved radially outwards relative to the first plug connector (2) by the bevel ramp (22) of the second plug connector (7) and the second plug connector (7) is fully inserted in the first plug connector (2) and locked by the at least one retaining portion (19, 20) which can then engage in the groove (21) of the second plug connector (7).

11. Method of using a plug connection (1) according to any one of claims 2 to 5, **characterized in that** before using each first plug connector (2), the detent spring (13) is optionally closed and the release device (33) is deactivated by turning the ring (34) on the external face (12) of the first plug connector (2) so that the respectively more deeply recessed portion (35, 35', 37, 37') of the ring (34) is moved above the respective recess (29, 29`, 30, 30`) of the slot (16, 17) of the first plug connector (2), thereby exposing the at least one recess (29, 29`, 30, 30`) and enabling the at least one arm (14, 15) of the detent spring (13) to be positioned in the at least one recess (29, 29', 30, 30'), and in the event of an attempt to insert the second plug connector (7), the at least one arm (14, 15) is either already positioned in the at least one recess (29, 29`, 30, 30`) or is moved into the at least one recess (29, 29', 30, 30') by the bevel ramp (22) of the second plug connector (7) so that the at least one arm (14, 15) is prevented from effecting a movement radially outwards relative to the first plug connector (2) and making it impossible to insert the second plug connector (7) fully in the first plug connector (2), and that during or immediately after a line has been successfully fitted to the fixing end (4) of the first plug connector (2) by means of a fitting device, the release device (33) of the detent spring (13) is activated by turning the ring (34) so that respectively the less deeply recessed portion (36, 36', 38, 38') of the ring (34) is moved above the respective recess (29, 29', 30, 30') of the slot (16, 17) so that the at least one recess (29, 29', 30, 30') is covered and the at least one arm (14, 15) is preferably moved along the bevel (39, 39', 40, 40') extending between the more deeply recessed portion (35, 35', 37, 37') and the less deeply recessed portion (36, 36', 38, 38`) out of the at least one recess (29, 29`, 30, 30') or the at least one arm (14, 15) is held outside the at least one recess (29, 29', 30, 30'), and wherein in the event of an attempt to insert the second plug connector (7), the at least one arm (14, 15) is moved radially outwards relative to the first plug connector (2) by the bevel ramp (22) of the second plug connector (7) and the second plug connector (7) is fully inserted in the first plug connector (2) and locked by the at least one arm (14, 15) which is then able to engage in the groove (21) of the second plug connector (7).

12. Method according to any one of claims 10 or 11, **characterized in that** during or immediately after the line has been successfully fitted to the fixing end (4) of the first plug connector (2), the release device (33) is activated by the fitting device for the line.

## Revendications

1. Connexion par enfichage (1) pour relier des lignes destinées à des liquides ou gaz sous pression, comprenant un premier connecteur à enfichage (2) avec un côté d'enfichage (3) et un côté de fixation (4) axialement opposé, un second connecteur à enfichage (7) avec un côté d'enfichage (8) et un côté de fixation (9) axialement opposé, le second connecteur à enfichage (7) étant enfichable, par son côté d'enfichage (8), dans le premier connecteur à enfichage (2) via le côté d'enfichage (3) de celui-ci, et un ressort d'encliquetage (13) fixé au premier connecteur à enfichage (2) qui s'engage, en une position fermée, au premier connecteur à enfichage (2) et, dans le cas d'un second connecteur à enfichage (7) enfiché et comportant au moins une zone d'arrêt (19, 20), dans une rainure (21) s'étendant de manière radialement périphérique dans une face extérieure (10) du second connecteur à enfichage (7) de façon qu'une séparation du second connecteur à enfichage (7) enfiché dans le premier connecteur à enfichage (2) soit empêchée, et un biseau d'attaque (22) radialement périphérique pour ladite au moins une zone d'arrêt (19, 20) du ressort d'encliquetage (13) étant formé entre le côté d'enfichage (8) et la rainure (21) du second connecteur à enfichage (7), de préférence immédiatement devant la rainure (21), **caractérisée en ce que** le ressort d'encliquetage (13), dans la position fermée, est déplaçable sur le premier connecteur à enfichage (2) d'une position bloquée, dans laquelle position un mouvement radialement vers l'extérieur de ladite au moins une zone d'arrêt (19, 20) est bloqué par rapport au premier connecteur à enfichage (2), en une position débloquée dans laquelle position le mouvement radialement vers l'extérieur de ladite au moins une zone d'arrêt (19, 20) est libéré, et **en ce qu'**un dispositif de déblocage (33), apte à être activé de manière sélective, est disposé au premier connecteur à enfichage (2), le dispositif de déblocage (33) désactivé autorisant un positionnement du ressort d'encliquetage (13) dans la position bloquée et le dispositif de déblocage (33) activé maintenant le ressort d'encliquetage (13) dans la position débloquée.

2. Connexion par enfichage selon la revendication 1, **caractérisée en ce que** le ressort d'encliquetage (13) est disposé essentiellement sur une face extérieure (12) du premier connecteur à enfichage (2) et comporte au moins une branche (14, 15), laquelle branche (14, 15) s'étend, lorsque le ressort d'encliquetage (13) est en état fermé, à travers une fente s'étendant radialement en périphérie d'une partie du premier connecteur à enfichage (2), jusque dans l'intérieur (18) du premier connecteur à enfichage (2) et forme ladite au moins une zone d'arrêt (19, 20), la fente (16, 17) comportant, dans une de ses zones d'extrémité (27, 27', 28, 28'), un évidement (29, 29', 30, 30') ou un élargissement tourné vers le côté opposé au côté d'enfichage (3) du premier connecteur (2) pour recevoir ladite au moins une branche (14, 15) du ressort d'encliquetage (13), lequel évidement (29, 29', 30, 30') s'étend sur moins que la moitié de l'étendue longitudinale de la fente (16, 17), et **en ce que** le dispositif de déblocage (33) est disposé essentiellement sur la face extérieure (12) du premier connecteur à enfichage (2) et comporte une bague (34) mobile en rotation le long de l'étendue longitudinale de la fente (16, 17), laquelle bague (34) comportant, dans la zone de l'évidement (29, 29', 30, 30') de la fente (16, 17), deux zones d'enfoncements différents (35, 36, 35', 36', 37, 38, 37', 38'), vu dans la direction axiale vers le côté de fixation (4) du premier connecteur à enfichage (2), de préférence avec un biseau (39, 39', 40, 40') s'étendant entre elles, une rotation de la bague (34) faisant soit déplacer la zone de plus grand enfoncement (35, 35', 37, 37') sur l'évidement (29, 29', 30, 30') de façon que l'évidement (29, 29', 30, 30') soit dégagé et le dispositif de déblocage (33) soit désactivé, soit déplacer la zone de moindre enfoncement (36, 36', 38, 38') sur l'évidement (29, 29', 30, 30') de façon que l'évidement (29, 29', 30, 30') soit recouvert et le dispositif de déblocage (33) soit activé.

3. Connexion par enfichage selon la revendication 2, **caractérisée en ce que** sont formés plusieurs fentes (16, 17) et un ressort d'encliquetage (13) avec plusieurs zones d'arrêt (19, 20) correspondantes, notamment deux fentes (16, 17) disposées l'une en face de l'autre avec des évidements (29, 29', 30, 30') symétriquement disposés et un ressort d'encliquetage (13) avec deux branches (14, 15) ou zones d'arrêt (19, 20).

4. Connexion par enfichage selon la revendication 2 ou 3, **caractérisée en ce que** la fente correspondante (16, 17) dans le premier connecteur à enfichage (2) comprend, dans les deux zones d'extrémités (27, 27', 28, 28'), un évidement respectif (29, 29', 30, 30') s'étendant sur moins que la moitié de l'étendue longitudinale de la fente (16, 17), et **en ce que** la bague (34) mobile en rotation comporte, dans la zone d'un évidement (29, 29', 30, 30'), deux zones d'enfoncements différents (35, 36, 35', 36', 37, 38, 37', 38') respectifs, vu dans la direction axiale vers le côté de fixation (4) du premier connecteur à enfichage (2), de préférence avec une pente (39, 39', 40, 40') s'étendant entre elles.

5. Connexion par enfichage selon l'une quelconque des revendications 2 à 4, **caractérisée en ce qu'**une zone (31, 32) du premier connecteur à enfichage (2), laquelle zone (31, 32) est située immédiatement à côté de la fente (16, 17) en direction du côté de fixation (4) du premier connecteur à enfichage (2), est formée par une partie en tôle, notamment à plusieurs couches.

6. Connexion par enfichage selon l'une quelconque des revendications précédentes, **caractérisée en ce qu'**au moins une avancée (41, 42) axialement orientée est formée sur la face extérieure (10) du second connecteur à enfichage (7), ladite avancée (41, 42) pouvant être introduite, lors de l'enfichage du second connecteur à enfichage (7) dans le premier connecteur à enfichage (2), dans au moins une rainure (47, 48) correspondante orientée axialement avec une ouverture de face frontale (49, 50) sur le côté d'enfichage (3) du premier connecteur à enfichage (2), lorsque le dispositif de déblocage (33) est activé, et **en ce que** l'introduction de ladite au moins une avancée (41, 42) dans ladite au moins une rainure (47, 48) est bloquée par le dispositif de déblocage (33) désactivé.

7. Connexion par enfichage selon la revendication 6, **caractérisée en ce que** le dispositif de déblocage (33) est disposé essentiellement sur la face extérieure (12) du premier connecteur à enfichage (2) et comporte une bague (34) mobile en rotation le long de la périphérie du premier connecteur à enfichage (2), laquelle bague (34) comporte une première partie de rainure (43, 44) qui est alignée, lorsque le dispositif de déblocage (33) est activé, en direction axiale sur une seconde partie de rainure (45, 46) dans le premier connecteur à enfichage (2), et laquelle première partie de rainure (43, 44) est disposée espacée de la seconde partie de rainure (45, 46) le long du pourtour extérieur du premier connecteur à enfichage (2) lorsque le dispositif de déblocage (33) est désactivé par une rotation de la bague.

8. Connexion par enfichage selon l'une quelconque des revendications précédentes, **caractérisée en ce qu'**une avancée d'arrêt (51) du dispositif de déblocage (33) s'engage dans une première rainure d'arrêt (52) lorsque le dispositif de déblocage (33) est désactivé et dans une seconde rainure d'arrêt (53) lorsque le dispositif de déblocage (33) est activé et **en ce que** l'avancée d'arrêt (51) est adaptée pour être sortie, notamment par un effort mécanique, de la rainure d'arrêt (52, 53) correspondante et est adaptée pour être déplacée, ensemble avec le dispositif de déblocage (33), vers la respectivement autre rainure d'arrêt (53, 52).

9. Connexion par enfichage selon l'une quelconque des revendications précédentes, **caractérisée en ce que** le ressort d'encliquetage (13) est déplaçable d'une position fermée sur le premier connecteur à enfichage (2) vers une position ouverte sur le premier connecteur à enfichage (2), dans laquelle position ouverte ladite au moins une zone d'arrêt (19, 20) du ressort d'encliquetage (13) est disposée à l'extérieur de la rainure (21) sur la face extérieure (10) d'un second connecteur à enfichage (7) enfiché.

10. Procédé d'utilisation d'une connexion par enfichage (1) selon l'une quelconque des revendications précédentes, **caractérisé en ce que**, avant l'utilisation de chaque premier connecteur à enfichage (2), le ressort d'encliquetage (13) est fermé le cas échéant et le dispositif de déblocage (33) est désactivé, ce qui permet un positionnement du ressort d'encliquetage (13) dans la position bloquée, et où, lors d'un essai d'enfichage avec le second connecteur à enfichage (7), le ressort d'encliquetage (13) soit est déjà positionné dans la position bloquée, soit est déplacé vers la position bloquée par le biseau d'arrêt (22) du second connecteur à enfichage (7), si bien qu'un mouvement radialement vers l'extérieur de ladite au moins une zone d'arrêt (19, 20) du ressort d'encliquetage (13) est bloqué par rapport au premier connecteur à enfichage (2) et un enfichage complet du second connecteur à enfichage (7) dans le premier connecteur à enfichage (2) est rendu impossible, et **en ce que**, pendant ou immédiatement après une fixation, avec succès, d'une ligne sur le côté de fixation (4) du premier connecteur à enfichage (2) à l'aide d'un dispositif de fixation, le dispositif de déblocage (33) du ressort d'encliquetage (13) est activé, ce par quoi le ressort d'encliquetage (13) est déplacé dans la position débloquée ou y est maintenu, et où, lors d'un essai d'enfichage avec le second connecteur à enfichage (7), ladite au moins une zone d'arrêt (19, 20) du ressort d'encliquetage (13) est déplacée, par le biseau d'arrêt (22) du second connecteur à enfichage (7), radialement vers l'extérieur par rapport au premier connecteur à enfichage (2) et que le second connecteur à enfichage (7) est enfiché entièrement dans le premier connecteur à enfichage (2) et est arrêté par ladite au moins une zone d'arrêt (19, 20) laquelle peut alors s'engager dans la rainure (21) du second connecteur à enficher (7).

11. Procédé d'utilisation d'une connexion par enfichage (1) selon l'une quelconque des revendications 2 à 5, **caractérisé en ce que**, avant l'utilisation de chaque premier connecteur à enfichage (2), le ressort d'encliquetage (13) est fermé le cas échéant et le dispositif de déblocage (33) est désactivé par le fait que par une rotation de la bague (34) sur la face extérieure (12) du premier connecteur à enfichage (2), la zone respective de plus grand enfoncement (35, 35', 37, 37') de la bague (34) est déplacée sur l'évidement (29, 29', 30, 30') de la fente (16, 17) du premier connecteur à enfichage (2), ce par quoi ledit au moins un évidement (29, 29', 30, 30') est dégagé et un positionnement de ladite au moins une branche (14, 15) du ressort d'encliquetage (13) dans ledit au moins un évidement (29, 29', 30, 30') est autorisé, et où, lors d'un essai d'enfichage avec le second connecteur à enfichage (7), ladite au moins une branche (14, 15) soit est déjà positionnée dans ledit au moins un évidement (29, 29', 30, 30'), soit est déplacée, par le biseau d'arrêt (22) du second connecteur à enfichage (7), dans ledit au moins un évidement (29, 29', 30, 30'), si bien que ladite au moins une branche (14, 15) est bloquée en mouvement radial vers l'extérieur par rapport au premier connecteur à enfichage (2) et un enfichage complet du second connecteur à enfichage (7) dans le premier connecteur à enfichage (2) est rendu impossible, et **en ce que**, pendant ou immédiatement après une fixation, avec succès, d'une ligne sur le côté de fixation (4) du premier connecteur à enfichage (2) à l'aide d'un dispositif de fixation, le dispositif de déblocage (33) du ressort d'encliquetage (13) est activé par le fait que par une rotation de la bague (34), la zone respective de moindre enfoncement (36, 36', 38, 38') de la bague (34) est déplacée sur l'évidement (29, 29', 30, 30') respectif de la fente (16, 17), ce par quoi ledit au moins un évidement (29, 29', 30, 30') est recouvert et ladite au moins une branche (14, 15) est sortie dudit au moins un évidement (29, 29', 30, 30'), de préférence le long de la pente (39, 39', 40, 40') s'étendant entre la zone de plus grand enfoncement (35, 35', 37, 37') et la zone de moindre enfoncement (36, 36', 38, 38'), ou ladite au moins une branche (14, 15) est maintenue à l'extérieur dudit au moins un évidement (29, 29', 30, 30'), et où, lors d'un essai d'enfichage avec le second connecteur à enfichage (7), ladite au moins une branche (14, 15) est déplacée, par le biseau d'arrêt (22) du second connecteur à enfichage (7), radialement vers l'extérieur par rapport au premier connecteur à enfichage (2) et que le second connecteur à enfichage (7) est enfiché entièrement dans le premier connecteur à enfichage (2) et est arrêté par ladite au moins une branche (14, 15) laquelle peut alors s'engager dans la rainure (21) du second connecteur à enficher (7).

12. Procédé selon l'une des revendications 10 ou 11, **caractérisé en ce que**, pendant ou immédiatement après une fixation, avec succès, d'une ligne sur le côté de fixation (4) du premier connecteur à enfichage (2), l'activation du dispositif de déblocage (33) est effectuée par le dispositif de fixation pour la ligne.
